(19) Europäisches Patentamt
European Patent Office
Office européen des brevets

(11) **EP 4 620 794 A1**

(12) **EUROPEAN PATENT APPLICATION**

(43) Date of publication:
**24.09.2025 Bulletin 2025/39**

(21) Application number: **25162036.5**

(22) Date of filing: **06.03.2025**

(51) International Patent Classification (IPC):
**B62K 11/04** (2006.01)     **B62M 7/02** (2006.01)

(52) Cooperative Patent Classification (CPC):
**B62K 11/04; B62M 7/02;** F01N 2390/02;
F01N 2410/00; F01N 2470/14; F01N 2470/18;
F01N 2590/04

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.03.2024 JP 2024042364
10.06.2024 JP 2024093640**

(71) Applicant: **Yamaha Hatsudoki Kabushiki Kaisha
Iwata-shi, Shizuoka 438-8501 (JP)**

(72) Inventor: **SAKAMOTO, Noriaki
Iwata-shi, 4388501 (JP)**

(74) Representative: **Studio Torta S.p.A.
Via Viotti, 9
10121 Torino (IT)**

(54) **STRADDLED VEHICLE**

(57) There is provided a straddled vehicle that is less likely to enter a wheelie state in circuit traveling or the like; thestraddled vehicle (1) includes a front wheel (24), a rear wheel (49), and an exhaust device (29) that discharges exhaust gas; the exhaust device (29) including an exhaust port (73) that injects the exhaust gas to apply a reaction force F to the front wheel (24); the reaction force (F) suppresses the front wheel (24) from floating up from the road surface (G); by suppressing the front wheel (24) from floating up from the road surface (G), it is possible to suppress the straddled vehicle (1) from entering a wheelie state in circuit traveling or the like; in addition, the exhaust device (29) using the reaction force (F) generated when the exhaust gas is injected to suppress the front wheel (24) from floating up from the road surface (G); therefore, the exhaust device 29 can contribute to the posture control of the straddled vehicle (1) by effectively utilizing the exhaust gas.

Fig.2

EP 4 620 794 A1

# Description

Technical Field

The present invention relates to a straddled vehicle.

Background

In a case where driving a straddled vehicle, for example, in a case where a driver rapidly opens an accelerator of the straddled vehicle in circuit traveling or the like, or in a case where the driver rapidly connects a clutch of the straddled vehicle in circuit traveling or the like, the straddled vehicle rapidly accelerates. When the straddled vehicle rapidly accelerates, the straddled vehicle tends to enter a wheelie state. When the straddled vehicle enters the wheelie state, the front wheel of the straddled vehicle floats upward from the road surface. That is, in a case where the straddled vehicle is in a wheelie state, the front wheel of the straddled vehicle is not in contact with the road surface, and the front wheel of the straddled vehicle is away from the road surface. In other words, in a case where the straddled vehicle is in a wheelie state, the front wheel of the straddled vehicle is located above the road surface. Therefore, in a case where the straddled vehicle is in a wheelie state, it is difficult to accelerate the straddled vehicle.

Patent Literature 1 discloses a device for controlling an engine of a straddled vehicle in a case where the straddled vehicle is in a wheelie state. The device disclosed in Patent Literature 1 includes an acceleration sensor and an ECU. The acceleration sensor detects the inclination of the straddled vehicle. The ECU determines whether the straddled vehicle is in a wheelie state on the basis of the detection result of the acceleration sensor. When the ECU determines that the straddled vehicle is in a wheelie state, the ECU decreases the output of the engine of the straddled vehicle. When the ECU reduces the output of the engine, the straddled vehicle decelerates. When the straddled vehicle in a wheelie state decelerates, the front wheel located above the road surface drops downward and comes into contact with the road surface again. That is, when the front wheel comes into contact with the road surface again, the straddled vehicle gets out of the wheelie state and returns to the normal state. In the present application, a state in which the front wheel of the straddled vehicle is in contact with the road surface is referred to as a normal state and is distinguished from a wheelie state. As described above, by using the device disclosed in Patent Literature 1, it is easy to shorten the period during which the straddled vehicle is in a wheelie state.

Patent Literature

[Patent Literature 1]
JP 2002-70709 A

Technical Problem

Even in the conventional technique disclosed in Patent Literature 1, when a straddled vehicle is rapidly accelerated in circuit traveling or the like, the straddled vehicle easily enters a wheelie state. That is, even in a case where the device disclosed in Patent Literature 1 is used in a straddled vehicle, it is difficult to prevent the state from being changed from the normal state to the wheelie state. Therefore, even in the conventional technique disclosed in Patent Literature 1, it is difficult to sufficiently improve the acceleration performance of the straddled vehicle in circuit traveling or the like.

The present invention has been made in view of such circumstances, and a main object thereof is to provide a straddled vehicle that is less likely to enter a wheelie state in circuit traveling or the like.

Description of the invention

In order to achieve such an object, the invention has the following configuration.

That is, a straddled vehicle according to the present invention includes a front wheel, a rear wheel, and an exhaust device that discharges exhaust gas. The exhaust device includes a first exhaust port that injects the exhaust gas to apply a first force to the front wheel. The first force acts in a direction of suppressing the front wheel from floating up from a road surface.

(Operation and Effect) According to this configuration, the straddled vehicle includes the front wheel, the rear wheel, and the exhaust device. The exhaust device discharges exhaust gas. The exhaust device includes a first exhaust port. The first exhaust port injects the exhaust gas to apply a first force to the front wheel. The first force acts in a direction of suppressing the front wheel from floating up from the road surface. That is, the first force acts in a direction of pressing the front wheel against the road surface. Therefore, the front wheel is prevented from floating up from the road surface. Therefore, in circuit traveling or the like, the straddled vehicle is less likely to enter a wheelie state. As an example, even in a case where the straddled vehicle rapidly accelerates in circuit traveling or the like, it is difficult for the straddled vehicle to be in a wheelie state. As a result, the acceleration performance of the straddled vehicle can be easily improved in circuit traveling or the like.

In the above-described straddled vehicle, when the straddled vehicle starts, the first exhaust port preferably injects the exhaust gas to apply a first force to the front wheel.

(Operation and Effect) In this case, in a case where the straddled vehicle starts, the first force acts in a direction of suppressing the front wheel from floating up from the road surface. Therefore, when the straddled vehicle starts in circuit traveling or the like, the straddled vehicle is less likely to enter a wheelie state. Therefore, in circuit traveling or the like, the acceleration performance of the straddled vehicle when the straddled vehicle starts can be easily improved.

In the above-described straddled vehicle, when the straddled vehicle rapidly accelerates, the first exhaust port preferably injects the exhaust gas to apply the first force to the front wheel.

(Operation and Effect) In this case, as an example, in a case where the straddled vehicle rapidly accelerates in circuit traveling or the like, the first force acts in a direction of suppressing the front wheel from floating up from the road surface. Therefore, when the straddled vehicle rapidly accelerates in circuit traveling or the like, the straddled vehicle is less likely to enter a wheelie state. Therefore, in circuit traveling or the like, the acceleration performance of the straddled vehicle when the straddled vehicle rapidly accelerates can be easily improved.

In the above-described straddled vehicle, the first force is preferably a reaction force of a jet of the exhaust gas injected from the first exhaust port. In other words, the first force preferably has a direction opposite to an injection direction of the exhaust gas injected from the first exhaust port.

(Operation and Effect) In this case, by injecting the exhaust gas from the first exhaust port, the first exhaust port easily applies the first force to the front wheel.

In the above-described straddled vehicle, the first exhaust port is preferably configured to eject the exhaust gas backward.

(Operation and Effect) In this case, it is easy for the first force to act in a direction of pressing the front wheel against the road surface. Therefore, the first force can suppress the front wheel from floating up from the road surface.

In the above-described straddled vehicle, the first exhaust port is preferably disposed above the rotation center of the rear wheel.

(Operation and Effect) In this case, it is easier for the first force to act in a direction of pressing the front wheel against the road surface. Therefore, the first force can further suppress the front wheel from floating up from the road surface.

In the above-described straddled vehicle, the first exhaust port is preferably disposed above the upper end of the rear wheel.

(Operation and Effect) In this case, it is easier for the first force to act in a direction of pressing the front wheel against the road surface. Therefore, the first force can further suppress the front wheel from floating up from the road surface.

In the above-described straddled vehicle, it is preferable that the first force generates a first moment around a rear contact point between the rear wheel and the road surface, and the first moment acts in a direction of pressing the front wheel against the road surface.

(Operation and Effect) In this case, the first force generates the first moment. The first moment is generated around a rear contact point between the rear wheel and the road surface. The first moment acts in a direction of pressing the front wheel against the road surface. In other words, the first moment moves the front wheel downward with the rear contact point as a fulcrum. Therefore, the first moment can be suppressed the front wheel from floating up from the road surface. Therefore, the first force can suppress the front wheel from floating up from the road surface.

In the above-described straddled vehicle, the first exhaust port is preferably configured to eject the exhaust gas upward.

(Operation and Effect) In this case, it is easy for the first force to act on the front wheel in the downward direction. Therefore, the first force can suppress the front wheel from floating up from the road surface.

In the above-described straddled vehicle, the first force preferably includes a first component that acts on the front wheel in the downward direction.

(Operation and Effect) In this case, the first force includes the first component. The first component acts on the front wheel in the downward direction. Therefore, the first component acts in a direction of suppressing the front wheel from floating up from the road surface. Therefore, the first force can suppress the front wheel from floating up from the road surface.

In the above-described straddled vehicle, it is preferable that the exhaust device includes a main exhaust port that discharges the exhaust gas, and the first exhaust port is smaller than the main exhaust port.

(Operation and Effect) In this case, it is easy to increase the speed of the exhaust gas injected from the first exhaust port. Therefore, it is easy to increase the first force.

In the above-described straddled vehicle, the first exhaust port preferably has a diameter smaller than a diameter of the main exhaust port.

(Operation and Effect) In this case, it is easy to increase the speed of the exhaust gas injected from the first exhaust port. Therefore, it is easy to increase the first force. Therefore, the first force can further suppress the front wheel from floating up from the road surface.

In the above-described straddled vehicle, the first exhaust port is preferably disposed above the main exhaust port.

(Operation and Effect) In this case, it is easier for the first force to act in a direction of pressing the front wheel against the road surface. Therefore, the first force can further suppress the front wheel from floating up from the road surface.

In the above-described straddled vehicle, the exhaust device preferably includes a main valve that opens and closes the main exhaust port.

(Operation and Effect) In this case, it is easy to control the injection of the exhaust gas at the main exhaust port.

In the above-described straddled vehicle, in a case where the pressure of the exhaust gas in the exhaust device is greater than or equal to a predetermined value, the main valve is preferably configured to open the main exhaust port.

(Operation and Effect) In this case, for example, in a case where the pressure of the exhaust gas in the exhaust device is less than a predetermined value, the main valve closes the main exhaust port.

Therefore, in a case where the pressure of the exhaust gas in the exhaust device is less than the predetermined value, the main exhaust port does not inject the exhaust gas.

Therefore, in a case where the pressure of the exhaust gas in the exhaust device is less than the predetermined value, it is easy to increase the injection amount of the exhaust gas from the first exhaust port.

Therefore, in a case where the pressure of the exhaust gas in the exhaust device is less than the predetermined value, it is easy to increase the first force.

Therefore, in a case where the pressure of the exhaust gas in the exhaust device is less than the predetermined value, the straddled vehicle is less likely to enter the wheelie state in circuit traveling or the like as an example.

As a result, it is easy to improve the acceleration performance of the straddled vehicle in circuit traveling or the like.

The above-described straddled vehicle preferably includes a detection unit that detects a state of the straddled vehicle, and a main valve control unit that controls the main valve on the basis of a detection result of the detection unit.

(Operation and Effect) In this case, it is easy to control the injection of the exhaust gas in the main exhaust port according to the state of the straddled vehicle.

In the above-described straddled vehicle, the main valve control unit determines whether the front wheel is likely to float up from the road surface on the basis of a detection result of the detection unit, and the main valve control unit is preferably configured to close the main valve in a case where the main valve control unit determines that the front wheel is likely to float up from the road surface.

(Operation and Effect) In this case, in a case where the front wheel is likely to float up from the road surface, it is easy to increase the injection amount of the exhaust gas from the first exhaust port. Therefore, in a case where the front wheel is likely to float up from the road surface, it is easy to increase the first force. Therefore, even in a case where the front wheel is likely to float up from the road surface, the first force can suppress the front wheel from floating up from the road surface.

In the above-described straddled vehicle, the detection unit preferably includes at least one of a first sensor that detects a pitch angle of the straddled vehicle and a second sensor that detects a stroke amount of a front fork that supports the front wheel.

(Operation and Effect) In this case, it is easy for the detection unit to detect the posture of the straddled vehicle. Therefore, it is easy for the main valve control unit to control the main valve according to the posture of the straddled vehicle.

In the above-described straddled vehicle, the detection unit preferably includes at least one of:

  a third sensor that detects a pressure of the exhaust gas in the exhaust device;
  a fourth sensor that detects a speed of the straddled vehicle;
  a fifth sensor that detects acceleration of the straddled vehicle;
  a sixth sensor that detects an operation amount of an accelerator of the straddled vehicle;
  a seventh sensor that detects an opening degree of a throttle valve of the straddled vehicle; and
  an eighth sensor that detects a rotational speed of an engine of the straddled vehicle.

(Operation and Effect) In this case, it is easy for the detection unit to detect the posture of the straddled vehicle. Therefore, it is easy for the main valve control unit to control the main valve according to the posture of the straddled vehicle.

According to the present invention, it is possible to realize a straddled vehicle that is less likely to enter a wheelie state in circuit traveling or the like.

Brief Description of Drawings

  FIG. 1 is a left side view of a straddled vehicle according to a first embodiment.
  FIG. 2 is a right side view of a straddled vehicle according to the first embodiment.
  FIG. 3 is a longitudinal sectional view of an exhaust device according to the first embodiment.
  FIG. 4 is a longitudinal sectional view of the exhaust device according to the first embodiment.
  FIG. 5 is a longitudinal sectional view of the exhaust device according to the first embodiment.
  FIG. 6 is a functional block diagram illustrating a control system of the straddled vehicle according to the first embodiment.
  FIG. 7 is a right side view illustrating a jet of exhaust gas according to the first embodiment.
  FIG. 8 is a right side view illustrating a reaction force and a first component force of the exhaust gas according to the first embodiment.
  FIG. 9 is a right side view illustrating a reaction force and a first moment of exhaust gas according to the first embodiment.
  FIG. 10 is a right side view illustrating a jet of exhaust gas according to the first embodiment.
  FIG. 11 is a right side view illustrating a reaction force and a first moment of exhaust gas according to the first embodiment.

FIG. 12 is a functional block diagram illustrating a control system of a straddled vehicle according to a second embodiment.

FIG. 13 is a flowchart illustrating a process of an operation in the straddled vehicle according to the second embodiment.

FIG. 14 is a right side view of a straddled vehicle according to a third embodiment.

FIG. 15 is a right side view illustrating a jet of exhaust gas according to the third embodiment.

FIG. 16 is a right side view illustrating a reaction force of exhaust gas according to the third embodiment.

FIG. 17 is a right side view of a straddled vehicle according to a fourth embodiment.

FIG. 18 is a right side view illustrating a jet of exhaust gas according to the fourth embodiment.

FIG. 19 is a right side view illustrating a reaction force and a first moment of exhaust gas according to the fourth embodiment.

FIG. 20 is a longitudinal sectional view of an exhaust device according to a modification.

FIG. 21 is a longitudinal sectional view of an exhaust device according to a modification.

FIG. 22 is a flowchart illustrating a process of an operation in a straddled vehicle according to a modification.

FIG. 23 is a longitudinal sectional view of an exhaust device according to a modification.

FIG. 24 is a longitudinal sectional view of an exhaust device according to a modification.

FIG. 25 is a longitudinal sectional view of an exhaust device according to a modification.

FIG. 26 is a longitudinal sectional view of an exhaust device according to a modification.

Emobiments of the invention

[First Embodiment]

Hereinafter, a straddled vehicle 1 according to the present invention will be described with reference to the drawings.

<Schematic Configuration of Straddled Vehicle>

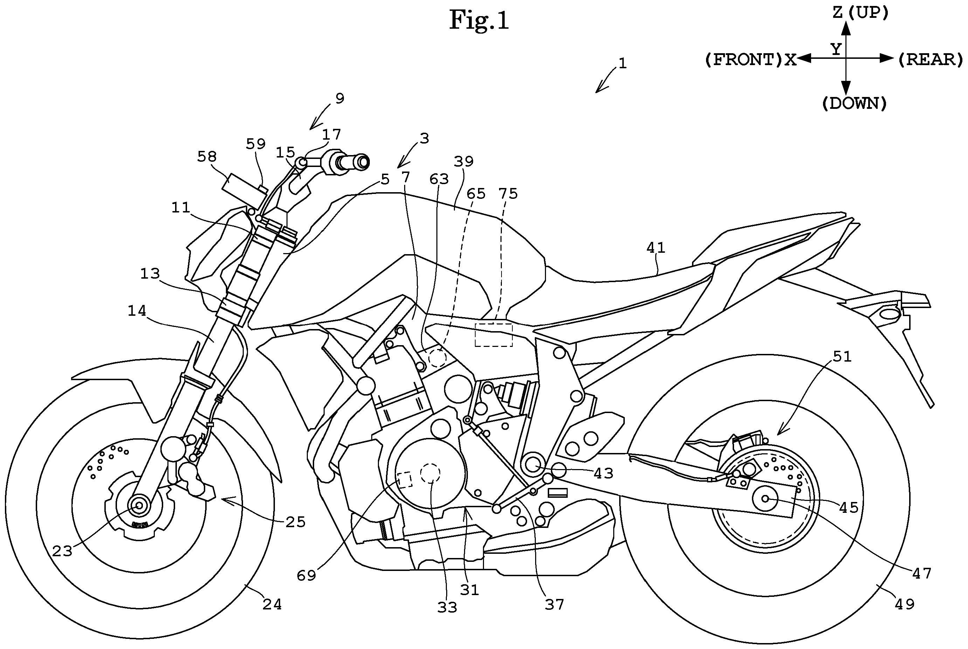

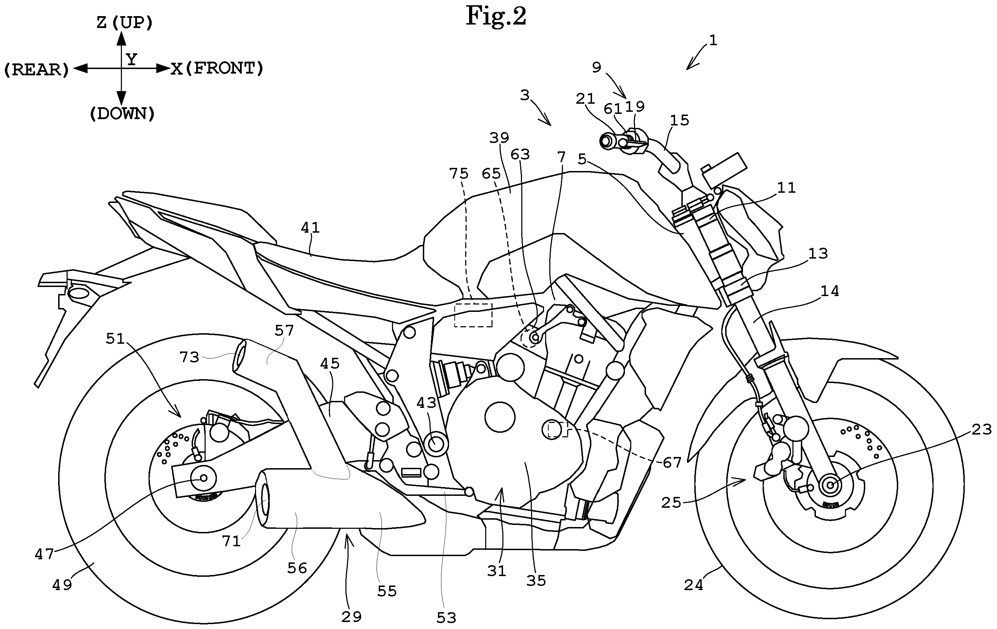

FIG. 1 is a left side view of a straddled vehicle according to a first embodiment. FIG. 2 is a right side view of the straddled vehicle according to the first embodiment.

The straddled vehicle 1 is a street type vehicle. A driver (also referred to as a rider) gets on the straddled vehicle 1 and steers the straddled vehicle 1.

FIGS. 1 and 2 illustrate a front-rear direction X, a width direction Y, and an up-down direction Z of the straddled vehicle 1. The front-rear direction X, the width direction Y, and the up-down direction Z are defined with reference to a driver who gets on the straddled vehicle 1. The front-rear direction X, the width direction Y, and the up-down direction Z are orthogonal to each other. The front-rear direction X and the width direction Y are horizontal. The up-down direction Z is vertical.

"Front", "rear", "up", "down", "right", and "left" mean "front", "rear", "up", "down", "right", and "left", respectively, for a driver who gets on the straddled vehicle 1. Unless otherwise specified in the present specification, "front" and "rear" include not only a direction parallel to the front-rear direction X but also a direction close to the front-rear direction X. The direction close to the front-rear direction X is, for example, a direction in which the angle formed by the front-rear direction X is 45 degrees or less. Similarly, unless otherwise specified, "right" and "left" include not only a direction parallel to the width direction Y but also a direction close to the width direction Y. Unless otherwise specified, "up" and "down" include not only a direction parallel to the up-down direction Z but also a direction close to the up-down direction Z. In each drawing, front, rear, up, down, right, and left are appropriately shown for reference.

In the present specification, each expression describing the arrangement has the following meaning. Hereinafter, the width direction Y will be described as an example, but the same applies to the front-rear direction X and the up-down direction Z.

The expression "a member Ma is disposed to the right/left of a member Mb" defines the position of the member Ma with respect to the member Mb in the width direction Y, and does not define the position of the member Ma with respect to the member Mb in the front-rear direction X and the up-down direction Z. In the present expression, the member Ma may or may not overlap the member Mb in the side view of the straddled vehicle 1.

The expression "the member Ma is disposed on the right/left of the member Mb" without reference to the viewing direction defines the position of the member Ma with respect to the member Mb in the width direction Y, the position of the member Ma with respect to the member Mb in the front-rear direction X, and the position of the member Ma with respect to the member Mb in the up-down direction Z. This expression means that the member Ma is disposed on the right/left side of the member Mb, and at least a part of the member Ma overlaps at least a part of the member Mb in the side view of the straddled vehicle 1.

The expression "the member Ma is disposed on the right/left side of the member Mb in a plan view of the straddled vehicle 1" defines the position of the member Ma with respect to the member Mb in the width direction Y and the position of the member Ma with respect to the member Mb in the front-rear direction X, and does not define the position of the member Ma with respect to the member Mb in the up-down direction Z. This expression means that the member Ma is disposed on the right/left side of the member Mb, the front end of the member Ma is located on the front side of the rear end of the member Mb, and the rear end of the member Ma is located on the rear side of the front end of the member Mb.

The expression "the member Ma is disposed on the right/left side of the member Mb in a front view of the straddled vehicle 1" defines the position of the member Ma with respect to the member Mb in the width direction Y and the position of the member Ma with respect to the member Mb in the up-down direction Z, and does not define the position of the member Ma with respect to the member Mb in the front-rear direction X. This expression means that the member Ma is disposed on the right/left side of the member Mb, the upper end of the member Ma is located above the lower end of the member Mb, and the lower end of the member Ma is located below the upper end of the member Mb.

In the present specification, "in a side view of the straddled vehicle 1" is appropriately referred to as "in a vehicle side view". Similarly, "in a plan view of the straddled vehicle 1" is appropriately referred to as "in a vehicle plan view".

The straddled vehicle 1 includes a vehicle body frame 3. The vehicle body frame 3 includes a head pipe 5 and a main frame 7. The head pipe 5 is disposed at a front portion of the straddled vehicle 1. The main frame 7 extends rearward and downward from the head pipe 5 in a vehicle side view.

The straddled vehicle 1 includes a steering device 9. The steering device 9 is supported by the vehicle body frame 3. Specifically, the steering device 9 is supported by the head pipe 5. The steering device 9 is rotatable with respect to the vehicle body frame 3.

The steering device 9 includes a top bridge 11, a bottom bridge 13, and a front fork 14. The top bridge 11 is disposed above the head pipe 5. The bottom bridge 13 is disposed below the top bridge 11. The bottom bridge 13 is disposed below the head pipe 5. The front fork 14 is supported by the top bridge 11 and the bottom bridge 13. The front fork 14 extends forward and downward from the top bridge 11 in a vehicle side view. The front fork 14 extends to a position lower than the bottom bridge 13.

The steering device 9 includes a handle 15. The handle 15 is supported by the top bridge 11. The entire handle 15 is disposed above the top bridge 11, for example. The driver grips the handle 15 to steer the steering device 9.

The handle 15 includes a clutch lever 17. The clutch lever 17 operates transmission of a driving force. The clutch lever 17 is operated by the driver to operate transmission of the driving force. The handle 15 includes a brake lever 19. The brake lever 19 operates braking of the front wheel. The brake lever 19 is operated by the driver to decelerate the straddled vehicle 1.

The handle 15 includes an accelerator grip 21. The accelerator grip 21 is also called a throttle. The accelerator grip 21 is operated by the driver to accelerate the straddled vehicle 1.

The steering device 9 includes a front axle 23. The front axle 23 is disposed below the bottom bridge 13. The front axle 23 is supported by the front fork 14.

The straddled vehicle 1 includes a front wheel 24. The front wheel 24 is supported by the steering device 9. Specifically, the front wheel 24 is supported by the front axle 23. The front wheel 24 is rotatable about the front axle 23.

The straddled vehicle 1 includes a front wheel brake device 25. The front wheel brake device 25 applies braking force enough to stop the rotation of the front wheel 24. In the straddled vehicle 1 according to the first embodiment, a configuration in which the front wheel brake device 25 is disposed on both the right side and the left side of the front wheel 24 is illustrated as an example. The front wheel brake device 25 may be disposed only on one of the right side and the left side of the front wheel 24.

The straddled vehicle 1 includes an engine 31. The engine 31 is supported by the vehicle body frame 3. Specifically, the engine 31 is supported by the main frame 7. The engine 31 is fixed to the vehicle body frame 3. The engine 31 does not swing with respect to the vehicle body frame 3. The engine 31 generates a driving force for causing the straddled vehicle 1 to travel. At least a part of the engine 31 is disposed below the main frame 7 in a vehicle side view. The engine 31 is disposed behind the steering device 9 in a vehicle side view.

The engine 31 includes a crankshaft 33 and a transmission 35. The crankshaft 33 outputs a driving force. The transmission 35 performs deceleration. The transmission 35 reduces the rotational speed of the crankshaft 33 by a plurality of stages of deceleration. The transmission 35 can be switched to a plurality of transmission ratios. The driving force shifted by the transmission 35 is transmitted to a drive shaft (not illustrated). The engine 31 includes a shift pedal 37. The shift pedal 37 is operated by the left foot of the driver. The shift pedal 37 operates a transmission ratio of the transmission 35.

The engine 31 is an internal combustion engine. The engine 31 includes a combustion chamber (not illustrated). The engine 31 burns fuel in the combustion chamber. The exhaust gas is generated in the combustion chamber.

The straddled vehicle 1 includes an exhaust device 29. The exhaust device 29 discharges the exhaust gas. The exhaust device 29 discharges the exhaust gas generated in the engine 31. The exhaust device 29 carries the exhaust gas from the engine 31. The exhaust device 29 is connected to the engine 31. The exhaust device 29 may be directly connected to the engine 31 or indirectly connected to the engine 31. As an example, the exhaust device 29 is connected to the engine 31 via a connection pipe (not illustrated). The exhaust gas generated in the combustion chamber of the engine 31 is guided to the exhaust device 29 via the connection pipe.

The straddled vehicle 1 includes a fuel tank 39. The fuel tank 39 is supported by the vehicle body frame 3. Specifically, the fuel tank 39 is supported by the main frame 7. The fuel tank 39 stores fuel.

The straddled vehicle 1 includes a seat 41. The seat 41 is supported by the vehicle body frame 3. The driver sits on the seat 41 and drives the straddled vehicle 1.

The straddled vehicle 1 includes a pivot shaft 43, a swing arm 45, and a rear axle 47. The pivot shaft 43 is supported by the vehicle body frame 3. Specifically, the pivot shaft 43 is supported by the main frame 7. The swing arm 45 is supported by the pivot shaft 43. The swing arm 45 is swingable about the pivot shaft 43 with respect to the vehicle body frame 3. The swing arm 45 extends rearward from the pivot shaft 43 in a vehicle side view. The rear axle 47 is supported by a rear portion of the swing arm 45.

The straddled vehicle 1 includes a rear wheel 49. The rear wheel 49 is supported by the rear axle 47. The rear wheel 49 is rotatable about the rear axle 47. The swing arm 45 and the rear wheel 49 are disposed behind the engine 31 in a vehicle side view. The swing arm 45 and the rear wheel 49 are disposed below the fuel tank 39 and the seat 41.

The straddled vehicle 1 includes a rear wheel brake device 51. The rear wheel brake device 51 applies a braking force enough to stop the rotation of the rear wheel 49.

The straddled vehicle 1 includes a brake pedal 53. The brake pedal 53 is operated by the right foot of the driver. The brake pedal 53 operates the rear wheel brake device 51. The brake pedal 53 is operated by the driver to decelerate the straddled vehicle 1.

The straddled vehicle 1 includes an accelerator opening degree sensor 61. The accelerator opening degree sensor 61 detects the opening of the accelerator grip 21.

A fuel supply device 63 is disposed behind the engine 31 in the front-rear direction X. The fuel supply device 63 supplies the fuel in the fuel tank 39 to the engine 31.

The straddled vehicle 1 includes a throttle valve opening degree sensor 65. The throttle valve opening degree sensor 65 detects an opening degree of a throttle valve that adjusts an intake amount of the engine 31.

The engine 31 includes a gear position sensor 67 that detects a gear position of the transmission 35. The gear position sensor 67 detects information related to the transmission ratio of the transmission 35. The engine 31 includes a crankshaft position sensor 69. The crankshaft position sensor 69 detects the angle of the crankshaft 33 and the rotational speed of the engine 31. The crankshaft position sensor 69 detects the phase of the crankshaft 33.

The straddled vehicle 1 includes an electronic control unit (ECU) 75 at the center in the front-rear direction X. The ECU 75 communicates with various sensors such as an IMU 81 described later and other control units via a communication network (not illustrated). The ECU 75 controls the entire straddled vehicle 1 including the engine 31 while transmitting and receiving data by the mutual communication.

<Configuration of Exhaust Device>

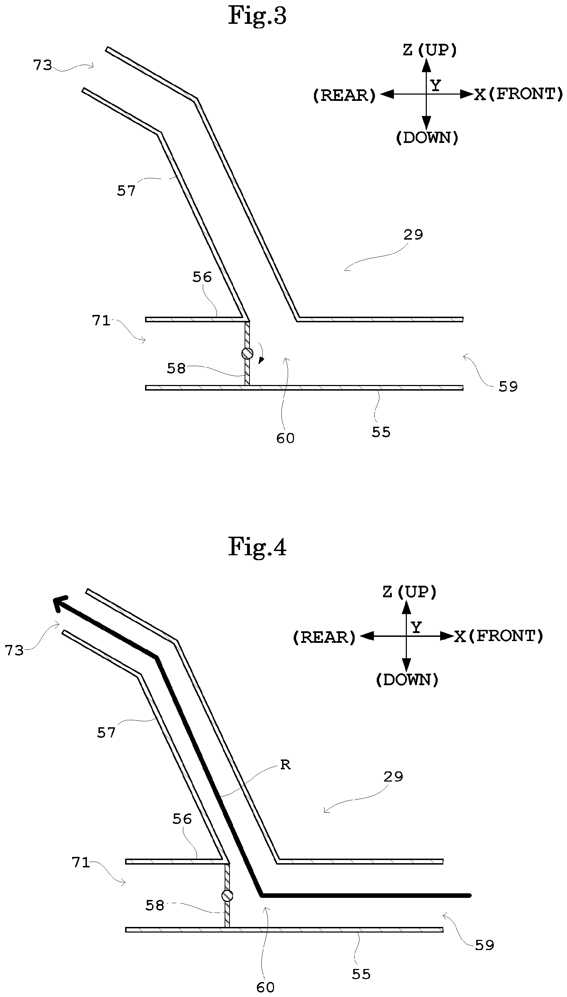

Here, a configuration of the exhaust device 29 included in the straddled vehicle 1 according to the first embodiment will be described with reference to FIG. 3. FIG. 3 is a longitudinal sectional view of the exhaust device 29. FIG. 2 is a right side view of the exhaust device 29.

As illustrated in FIG. 3, the exhaust device 29 includes a junction pipe 55, a first branch pipe 56, and a second branch pipe 57. The junction pipe 55 includes a guide port 59 at one end. The junction pipe 55 includes a branch portion 60 at the other end. The guide port 59 is connected to the engine 31 via a connection pipe of the engine 31. That is, the exhaust gas generated in the engine 31 is guided to the exhaust device 29 through the guide port 59.

The branch portion 60 of the junction pipe 55 is disposed behind the guide port 59 in a vehicle side view. The branch portion 60 of the junction pipe 55 is connected to each of one end of the first branch pipe 56 and one end of the second branch pipe 57. That is, the exhaust device 29 has a structure in which the junction pipe 55 branches into the first branch pipe 56 and the second branch pipe 57 at the branch portion 60.

The first branch pipe 56 extends rearward from the branch portion 60 in a vehicle side view. That is, the direction in which the first branch pipe 56 extends is the same as the direction in which the junction pipe 55 extends. An exhaust port 71 is provided at the other end of the first branch pipe 56. The exhaust port 71 injects the exhaust gas from the inside of the exhaust device 29 to the outside of the exhaust device 29. In other words, the exhaust port 71 injects the exhaust gas from the exhaust device 29 to the outside of the straddled vehicle 1. Specifically, the exhaust port 71 discharges the exhaust gas flowing from the junction pipe 55 to the first branch pipe 56 to the outside of the exhaust device 29. The exhaust port 71 according to the first embodiment is configured to discharge the exhaust gas rearward in a vehicle side view.

The second branch pipe 57 extends rearward and upward from the branch portion 60 in a vehicle side view. That is, the second branch pipe 57 is disposed above the first branch pipe 56. An exhaust port 73 is provided at the other end of the second branch pipe 57. The exhaust port 73 injects the exhaust gas from the inside of the exhaust device 29 to the outside of the exhaust device 29. In other words, the exhaust port 73 injects the exhaust gas from the exhaust device 29 to the outside of the straddled vehicle 1. Specifically, the exhaust port 73 discharges the exhaust gas flowing from the junction pipe 55 to the second branch pipe 57 to the outside of the exhaust device 29. The exhaust port 73 is disposed above the exhaust port 71.

The exhaust port 73 according to the first embodiment is configured to discharge the exhaust gas backward and upward in a vehicle side view. The exhaust port 73 according to the first embodiment is disposed above the exhaust port 71. The exhaust port 73 according to the first embodiment is disposed above the rear axle 47. That is, the exhaust port 73 is disposed above the rotation center of the rear wheel 49.

The diameter of the second branch pipe 57 is smaller than the diameter of the first branch pipe 56. That is, the exhaust port 73 of the second branch pipe 57 is configured to be smaller than the exhaust port 71 of the first branch pipe 56. Specifically, the diameter of the exhaust port 73 is smaller than the diameter of the exhaust port 71.

The exhaust device 29 includes an on-off valve 58. The on-off valve 58 is disposed inside the first branch pipe 56. The on-off valve 58 opens and closes the exhaust port 71 of the first branch pipe 56. That is, the on-off valve 58 adjusts opening and closing of the exhaust port 71. The on-off valve 58 is, for example, a spring-type valve. FIG. 3 illustrates a state in which the exhaust port 71 is closed by the on-off valve 58. In a case where the exhaust port 71 is closed by the on-off valve 58, it is described that "the on-off valve 58 is closed". In a case where the exhaust port 71 is opened by the on-off valve 58, it is described that "the on-off valve 58 is opened".

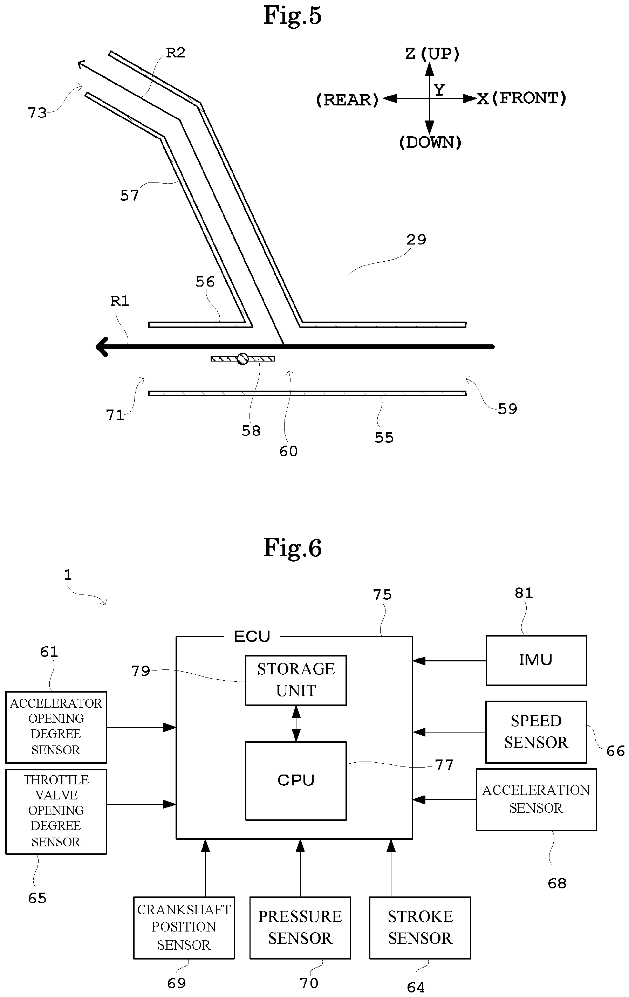

Here, the relationship between the flow of the exhaust gas in the exhaust device 29 and the state of the on-off valve 58 will be described with reference to FIGS. 4 and 5.

FIG. 4 illustrates a direction in which the exhaust gas flows in a case where the on-off valve 58 is closed. In a case where the on-off valve 58 is closed, the direction in which the exhaust gas flows is as indicated by an arrow denoted by reference numeral R. In a case where the on-off valve 58 is closed, the exhaust port 71 of the first branch pipe 56 is closed by the on-off valve 58. Therefore, the exhaust gas guided to the junction pipe 55 via the guide port 59 flows to the second branch pipe 57 at the branch portion 60. That is, all the exhaust gas flows inside the second branch pipe 57 and is discharged from the exhaust port 73. In other words, in a case where the on-off valve 58 is closed, the exhaust device 29 injects all the exhaust gas from the exhaust port 73.

In the straddled vehicle 1 according to the first embodiment, the exhaust port 73 injects the exhaust gas to apply a first force to the front wheel 24. The first force acts in a direction of suppressing the front wheel 24 from floating up from the road surface. That is, in the first embodiment, the exhaust gas is injected from the exhaust port 73, so that the straddled vehicle 1 is prevented from entering a wheelie state in, for example, circuit traveling. A mechanism for generating the first force acting in a direction of suppressing the front wheel 24 from floating up from the road surface by injecting the exhaust gas from the exhaust port 73 will be described later.

FIG. 5 illustrates a direction in which the exhaust gas flows in a case where the on-off valve 58 is opened. In a case where the on-off valve 58 is opened, the exhaust port 71 of the first branch pipe 56 is opened. The direction in which the first branch pipe 56 extends is the same as the direction in which the junction pipe 55 extends. The first branch pipe 56 is larger in cross-sectional area than the second branch pipe 57. Therefore, most of the exhaust gas guided to the junction pipe 55 via the guide port 59 flows to the first branch pipe 56 at the branch portion 60. Then, the exhaust gas flowing to the first branch pipe 56 is discharged to the outside of the exhaust device 29 via the exhaust port 71. That is, most of the exhaust gas is discharged from the exhaust port 71 as indicated by an arrow denoted by reference numeral R1 in FIG. 5.

On the other hand, only a part of the exhaust gas guided to the junction pipe 55 flows to the second branch pipe 57 at the branch portion 60. The exhaust gas flowing to the second branch pipe 57 is discharged to the outside of the exhaust device 29 via the exhaust port 73. That is, only a part of the exhaust gas is discharged from the exhaust port 73 as indicated by an arrow denoted by reference numeral R2 in FIG. 5. In other words, in a case where the on-off valve 58 is opened, the exhaust device 29 injects most of the exhaust gas from the exhaust port 71 and injects only a part of the exhaust gas from the exhaust port 73. As described above, by appropriately switching the state of the on-off valve 58 between the closed state and the opened state, the exhaust port for discharging the exhaust gas from the exhaust device 29 can be switched.

<Configuration of Control System>

Here, a control system of the straddled vehicle 1 according to the first embodiment will be described. FIG. 6 is a functional block diagram for explaining a control system of the straddled vehicle 1 according to the first embodiment.

The ECU 75 includes a CPU 77. The CPU 77 is a so-called central processing unit, and realizes various functions by executing various programs.

The ECU 75 includes a storage unit 79. The storage unit 79 stores a program and data related to the operation of the straddled vehicle 1. An example of the program stored in the storage unit 79 is a control program executed by the ECU 75. The storage unit 79 stores an opening condition and a closing condition. The opening condition is a condition for switching the on-off valve 58 to an opened state. The closing condition is a condition for switching the on-off valve 58 to a closed state. Details of the opening condition and the closing condition will be described later. The storage unit 79 may be rewritable. Various pieces of information stored in the storage unit 79 are appropriately read by the ECU 75.

The straddled vehicle 1 includes an IMU 81. The IMU 81 is also referred to as an inertial measurement unit. The IMU 81 detects three-dimensional inertial motion (translational motion and rotational motion in orthogonal three-axis directions) of the straddled vehicle 1. The IMU 81 can detect the posture of the straddled vehicle 1. The IMU 81 detects an angle (referred to as a pitch angle) of the straddled vehicle 1 around the axis in the width direction Y, that is, an inclination in the front-rear direction X. The IMU 81 detects an angle (referred to as a roll angle) of the straddled vehicle 1 around the axis in the front-rear direction X, that is, an inclination in the width direction Y. The IMU 81 detects an angle (referred to as a yaw angle) of the straddled vehicle 1 around the axis in the up-down direction Z. Information detected by the IMU 81 is transmitted to the ECU 75. That is, the ECU 75 can detect the posture of the straddled vehicle 1 via the IMU 81.

As illustrated in FIG. 6, the straddled vehicle 1 includes a stroke sensor 64, a speed sensor 66, an acceleration sensor 68, and a pressure sensor 70.

The stroke sensor 64 detects a stroke amount of the front fork 14. That is, the stroke sensor 64 detects the amount of extension and contraction of the front fork 14. The speed sensor 66 detects the traveling speed of the straddled vehicle 1. The acceleration sensor 68 detects the acceleration of the straddled vehicle 1. The pressure sensor 70 detects the pressure of the exhaust gas inside the exhaust device 29.

Information detected by various sensors such as the accelerator opening degree sensor 61, the stroke sensor 64, the throttle valve opening degree sensor 65, the speed sensor 66, the acceleration sensor 68, the crankshaft position sensor 69, and the pressure sensor 70 is configured to be transmitted to the ECU 75.

<Injection of Exhaust Gas>

Here, a mechanism for generating the first force acting in a direction of suppressing the front wheel 24 from floating up from the road surface by injecting the exhaust gas from the exhaust port 73 will be described.

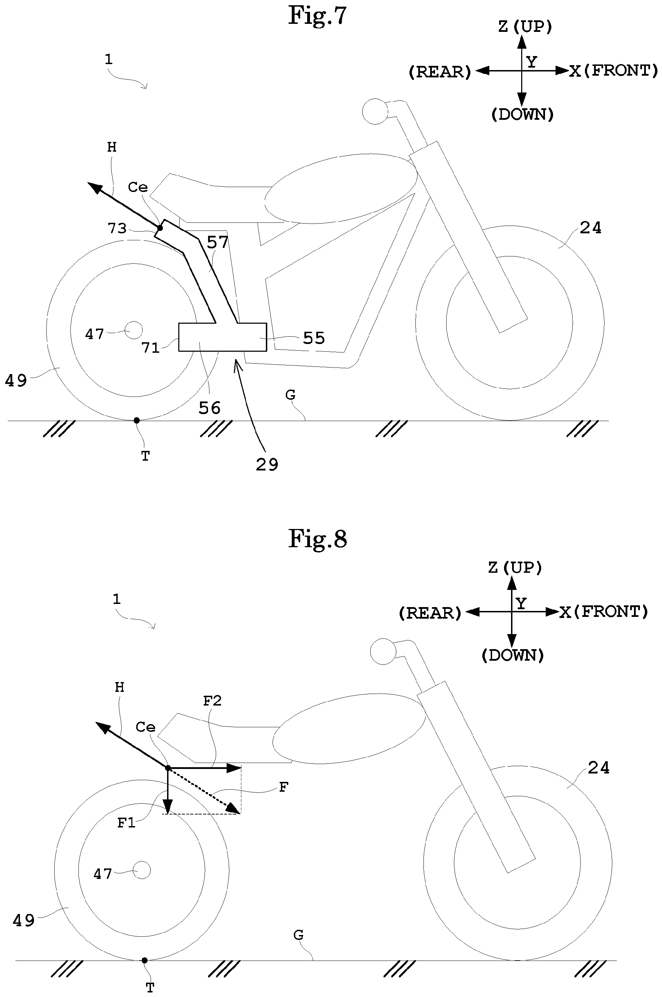

FIG. 7 is a schematic view of the straddled vehicle 1 and the exhaust device 29 in a right side view. FIG. 7 illustrates a state in which the on-off valve 58 is closed and the exhaust gas is injected from the exhaust port 73 to the outside of the exhaust device 29. A jet of the exhaust gas injected from the exhaust port 73 is indicated by reference sign H. That is, when the exhaust gas is injected from the exhaust port 73, the jet H is generated at a start point Ce corresponding to the center of the exhaust port 73. In FIG. 7 and the like, the road surface is indicated by reference sign G. A contact point between the road surface G and the rear wheel 49 is defined as a rear contact point T.

The first force described above is a reaction force F of the jet H. When the jet H is injected from the exhaust port 73, the reaction force F is generated as illustrated in FIG. 8. The reaction force F acts on the straddled vehicle 1. The reaction force F also acts on the front wheel 24. The reaction force F acts in a direction of suppressing the front wheel 24 from floating up from the road surface G.

A first mechanism that acts in a direction of suppressing the front wheel 24 from floating up from the road surface G by the reaction force F will be described with reference to FIG. 8. In FIG. 8, a part of the frame constituting the straddled vehicle 1 is omitted for convenience of description.

In the first embodiment, the exhaust port 73 is configured to discharge the exhaust gas upward and backward in a vehicle side view. Therefore, the jet H flows backward and upward from the start point Ce in a vehicle side view.

The reaction force F has a direction opposite to that of the jet H. Therefore, the reaction force F is a force acting forward and downward from the start point Ce in a vehicle side view.

The reaction force F is a force acting forward and downward from the start point Ce in a vehicle side view. Therefore, among the component forces of the reaction force F, a component force downward in the up-down direction Z from the start point Ce in a vehicle side view is defined as a first component force F1. In addition, a component force from the start point Ce to the front side in the front-rear direction X in a vehicle side view is defined as a second component force F2. In other words, by ejecting the exhaust gas rearward and upward in a vehicle side view from the exhaust port 73, the first component force F1 downward from the start point Ce in a vehicle side view acts on the straddled vehicle 1.

The first component force F1 acts on the front wheel 24. The first component force F1 acts on the front wheel 24 in the downward direction. The first component force F1 acting downward is a force acting in a direction of pressing the front wheel 24 of the straddled vehicle 1 against the road surface G. Since the first component force F1 acts in a direction of pressing the front wheel 24 against the road surface G, it is possible to suppress the front wheel 24 from floating up from the road surface G.

In summary, by discharging the exhaust gas above the exhaust port 73, the first component force F1 downward from the start point Ce is generated. By generating the first component force F1, it is possible to suppress the straddled vehicle 1 from entering a wheelie state.

In a case where the reaction force F is a downward force in the up-down direction Z, the first component force F1 becomes larger. That is, by disposing the exhaust port 73 such that the direction of the jet H becomes upward in the up-down direction Z, the first component force F1 can be further increased. As a result, the force in the direction of pressing the front wheel 24 against the road surface G can be increased.

The magnitudes of the reaction force F and the first component force F1 are proportional to the speed of the jet H. By making the exhaust port 73 smaller, the speed of the jet flow increases. Therefore, by making the exhaust port 73 smaller, the first component force can be made larger. As a result, the force in the direction of pressing the front wheel 24 against the road surface G can be increased.

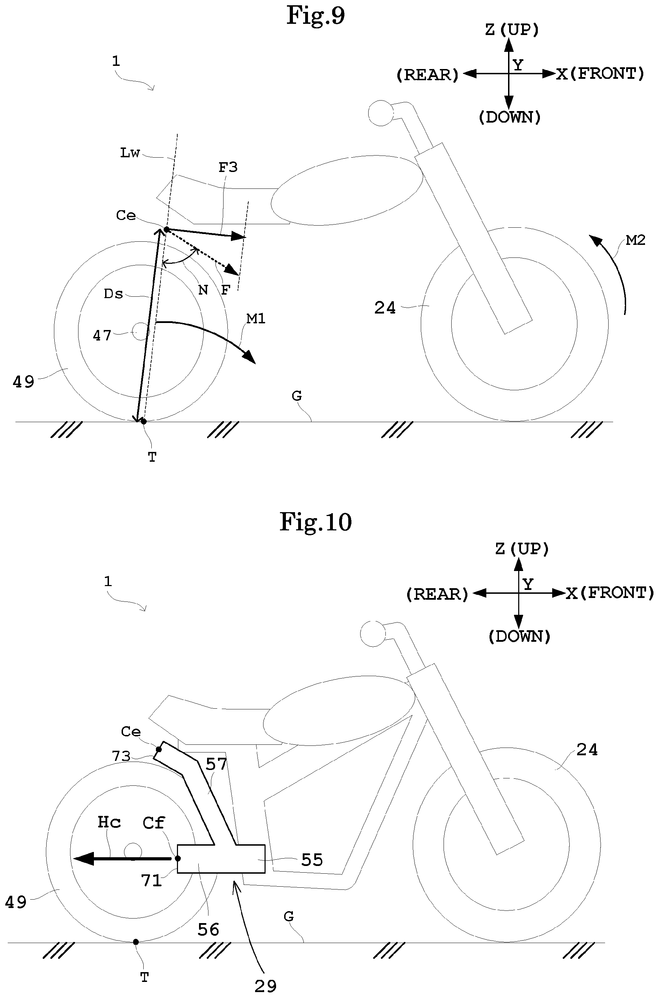

Next, a second mechanism for suppressing the front wheel 24 from floating up from the road surface G by the reaction force F will be described with reference to FIG. 9.

When the exhaust gas is injected from the exhaust port 73 to generate the jet H, the reaction force F of the jet H acts on the straddled vehicle 1. A contact point between the rear wheel 49 and the road surface G is defined as a rear contact point T. The start point Ce is located above the rear contact point T. The reaction force F acts forward and downward from the start point Ce in a vehicle side view. Therefore, the reaction force F generates a first moment M1. The first moment M1 acts around the rear contact point T. More specifically, the first moment M1 acts in the clockwise direction around the rear contact point T as a fulcrum in the right side view of the straddled vehicle 1. Therefore, due to the reaction force F, the first moment M1 having the rear contact point T as a fulcrum acts on the straddled vehicle 1.

The first moment M1 is a force acting in the clockwise direction around the rear contact point T as a fulcrum in the right side view of the straddled vehicle 1. That is, the first moment M1 acts forward and downward in a vehicle side view. Therefore, the first moment M1 is a force acting in a direction of pressing the front wheel 24 of the straddled vehicle 1 against the road surface G. In other words, the first moment M1 moves the front wheel 24 downward with the rear contact point T as a fulcrum. Therefore, since the first moment M1 acts in a direction of pressing the front wheel 24 against the road surface G, it is possible to suppress the front wheel 24 from floating up from the road surface G.

The reason why the straddled vehicle 1 can be prevented from entering a wheelie state by the first moment M1 will be further described. As illustrated in FIG. 9, in a case where a second moment M2 acts on the straddled vehicle 1, the front wheel 24 tries to float up from the road surface G. The second moment M2 is a force acting in the counterclockwise direction around the rear contact point T as a fulcrum in the right side view of the straddled vehicle 1. Since the first moment M1 is a force in a direction opposite to the second moment M2, the second moment M2 can be offset by generating the first moment M1. Therefore, by generating the first moment M1, it is possible to suppress the front wheel 24 from floating up from the road surface G.

As described above, in the right side view of the straddled vehicle 1, the first moment M1 acting in the clockwise direction around the rear contact point T as a fulcrum is generated by generating the jet H in the counterclockwise direction around the rear contact point T as a fulcrum. By generating the first moment M1, it is possible to prevent the straddled vehicle 1 from entering a wheelie state in circuit traveling or the like.

In FIG. 9, the distance from the rear contact point T to the start point Ce is indicated by a reference symbol Ds. A straight line connecting the rear contact point T and the start point Ce is indicated by a reference sign Lw. An angle formed by the direction of the reaction force F and the straight line Lw is indicated by a reference sign N. The component force of the reaction force F in the direction orthogonal to the straight line Lw is defined as a third component force F3. Here, the magnitude of the first moment M1 corresponds to a product of the magnitude L3 of the third component force F3 and the distance Ds. The third component force F3 is calculated by the following Expression (A) using the reaction force F and the angle N.

$$F3 = F \cdot (\sin N) \dots (A)$$

As indicated by the above-described Expression (A), the third component force F3 increases as the angle N is closer to 90°. That is, as the angle N is closer to 90°, the first moment M1 becomes stronger. In addition, as the distance Ds increases, the first moment M1 becomes a stronger force. In other words, the first moment M1 can be increased by disposing the exhaust port 73 at a position far from the road surface G. That is, in order to increase the first moment M1, the exhaust port 73 is preferably disposed above the rear axle 47, and the exhaust port 73 is more preferably disposed above the upper end of the rear wheel 49. By increasing the first moment M1, it is possible to further suppress the straddled vehicle 1 from entering a wheelie state in circuit traveling or the like.

The magnitude of the reaction force F is proportional to the speed of the jet H. By making the exhaust port 73 smaller, the speed of the jet H increases. Therefore, by making the exhaust port 73 smaller, the reaction force F can be made larger. That is, by making the exhaust port 73 smaller, the third component force F3 increases. Therefore, by making the exhaust port 73 smaller, the force in the direction of pressing the front wheel 24 against the road surface G can be increased.

FIG. 10 illustrates a state in which the on-off valve 58 is opened and the exhaust gas is injected from the exhaust port 71 to the outside of the exhaust device 29. A jet of the exhaust gas injected from the exhaust port 71 is indicated by a reference sign Hc. When the exhaust gas is injected from the exhaust port 71, the jet Hc is generated at a start point Cf corresponding to the center of the exhaust port 71. The exhaust port 71 is configured to discharge the exhaust gas rearward in the front-rear direction X in a vehicle side view. Therefore, the jet Hc flows backward in the front-rear direction X from the start point Cf in a vehicle side view.

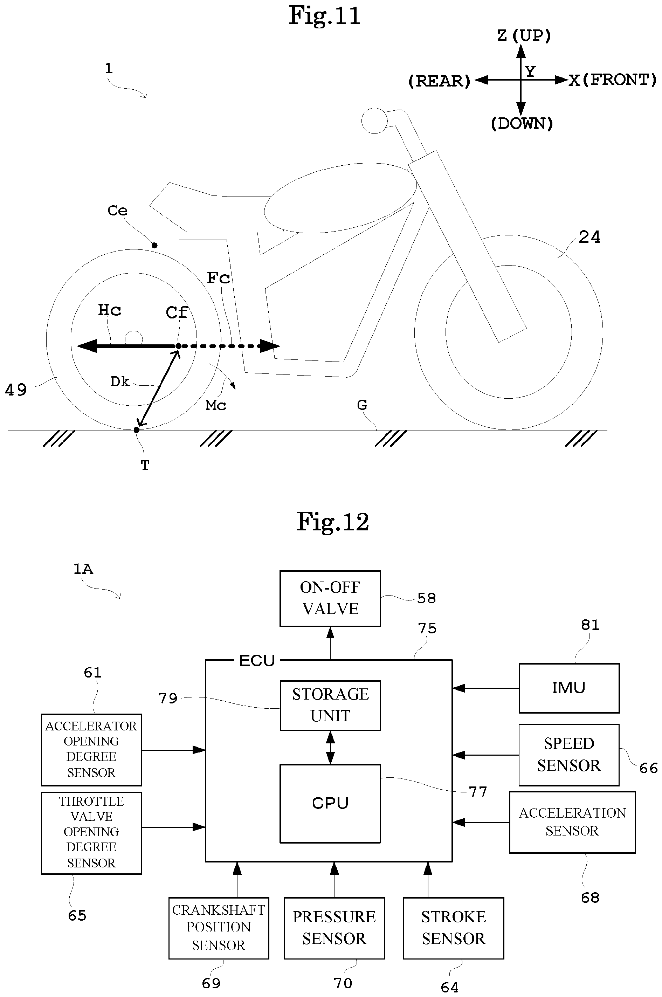

FIG. 11 illustrates a reaction force Fc generated by the jet Hc injected from the start point Cf corresponding to the exhaust port 71. In FIG. 11, illustration of the exhaust device 29 is omitted for convenience of description. The reaction force Fc has a direction opposite to that of the jet Hc. The jet Hc is a flow directed rearward in the front-rear direction X from the start point Cf in a vehicle side view. Therefore, the reaction force Fc is a force acting forward in the front-rear direction X from the start point Cf in a vehicle side view. In other words, the reaction force Fc acts in the horizontal direction or substantially the same direction as the horizontal direction. Therefore, the first component force of the reaction force Fc is zero or significantly small. The first component force of the reaction force Fc is a component force downward in the up-down direction Z from the start point Cf in a vehicle side view.

The exhaust port 71 is disposed below the exhaust port 73. In other words, the start point Cf corresponding to the position of the exhaust port 71 exists below the start point Ce corresponding to the position of the exhaust port 73. Therefore, a distance Dk from the start point Cf to the rear contact point T is shorter than the distance Ds from the start point Ce to the rear contact point T. Therefore, a moment Mc generated due to the reaction force Fc of the jet Hc illustrated in FIG. 11 is weaker than the first moment M1 generated due to the reaction force F of the jet H illustrated in FIG. 9.

The exhaust port 73 is configured to discharge the exhaust gas upward. Therefore, the first component force F1 of the reaction force F is larger than the first component force of the reaction force Fc. Therefore, in order to suppress the front wheel 24 from floating up from the road surface G, the reaction force F is more useful than the reaction force Fc.

The exhaust port 73 is disposed above the exhaust port 71. That is, as illustrated in FIGS. 9 and 11, the distance Ds from the rear contact point T to the exhaust port 73 is longer than the distance Dk from the rear contact point T to the exhaust port 71. Therefore, the first moment M1 generated by the reaction force F is larger than the moment Mc generated by the reaction force Fc. Therefore, in order to suppress the front wheel 24 from floating up from the road surface G, the reaction force F is more useful than the reaction force Fc.

As described above, as compared with the case where the exhaust gas is injected from the exhaust port 71, in the case where the exhaust gas is injected from the exhaust port 73, the force acting in the direction of pressing the front wheel 24 against the road surface can be increased. Therefore, as compared with the case where the exhaust gas is injected from the exhaust port 71, in the case where the exhaust gas is injected from the exhaust port 73, as an example, it is possible to further suppress the straddled vehicle 1 from entering a wheelie state in circuit traveling or the like.

<Control of On-Off Valve according to First Embodiment>

Next, a configuration of switching the on-off valve 58 from the closed state to the opened state in the first embodiment will be described. In the first embodiment, a spring-type valve is used as the on-off valve 58. That is, in the first embodiment, the on-off valve 58 is switched from the closed state to the opened state according to the magnitude of the pressure of the exhaust gas acting on the on-off valve 58. The pressure of the exhaust gas inside the exhaust device 29 is also referred to as "back pressure of the engine 31" or "back pressure of the exhaust gas".

In a case where the pressure of the exhaust gas inside the exhaust device 29 is less than a predetermined value K1, the on-off valve 58 is configured to be in a closed state.

The predetermined value K1 is a value set in advance according to various conditions exemplifying the weight and performance of the straddled vehicle 1. The predetermined value K1 may be changed by the driver using an input unit (not illustrated). The information of the predetermined value K1 is stored in the storage unit 79. As described above, in the first embodiment, a condition that the pressure of the exhaust gas inside the exhaust device 29 is less than the predetermined value K1 corresponds to the closing condition.

In a case where the traveling speed of the straddled vehicle 1 is low during driving of the straddled vehicle 1, the pressure of the exhaust gas inside the exhaust device 29 is low. In other words, in a case where the traveling speed of the straddled vehicle 1 is low, the pressure of the exhaust gas acting on the on-off valve 58 is low. That is, in a case where the traveling speed of the straddled vehicle 1 is low and the pressure of the exhaust gas is lower than the predetermined value K1, the on-off valve 58 maintains the closed state.

Examples of a situation in which a wheelie state is likely to occur during driving of the straddled vehicle 1 include a case of sudden acceleration in circuit traveling or the like, and a case of sudden connection of a clutch in circuit traveling or the like. In general, in circuit traveling or the like, in a case where the traveling speed of the straddled vehicle 1 is low, an operation of performing sudden acceleration and an operation of rapidly connecting the clutch are performed. In other words, in circuit traveling or the like, in a case where the traveling speed of the straddled vehicle 1 is low, the frequency at which the straddled vehicle 1 enters the wheelie state is high.

Therefore, in the straddled vehicle 1 according to the first embodiment, the on-off valve 58 is switched to the closed state in a case where the traveling speed of the straddled vehicle 1 is low and the pressure of the exhaust gas is low. That is, in a case where the traveling speed of the straddled vehicle 1 is low, the exhaust port from which the exhaust gas is injected from the exhaust device 29 is switched from the exhaust port 71 to the exhaust port 73. By injecting the exhaust gas from the exhaust port 73, the force acting in the direction of pressing the front wheel 24 against the road surface G increases as compared with the case where the exhaust gas is injected from the exhaust port 71. As a result, by injecting the exhaust gas from the exhaust port 73 in a case where the traveling speed of the straddled vehicle 1 is low, as an example, it is possible to further suppress the straddled vehicle 1 from entering a wheelie state due to circuit traveling or the like.

In a case where the pressure of the exhaust gas acting on the on-off valve 58 is greater than or equal to the predetermined value K1, the on-off valve 58 is switched to the opened state. A condition that the pressure of the exhaust gas inside the exhaust device 29 is greater than or equal to the predetermined value K1 corresponds to the opening condition.

In a case where the traveling speed of the straddled vehicle 1 is high, the amount of exhaust gas generated increases. Therefore, in a case where the traveling speed of the straddled vehicle 1 is high, the pressure of the exhaust gas inside the exhaust device 29 is high. In other words, in a case where the traveling speed of the straddled vehicle 1 is high, the pressure of the exhaust gas acting on the on-off valve 58 increases. That is, when the traveling speed of the straddled vehicle 1 increases and the pressure of the exhaust gas becomes greater than or equal to the predetermined value K1, the on-off valve 58 is opened by the pressure of the exhaust gas increased to greater than or equal to the predetermined value K1. That is, in the first embodiment, when the traveling speed of the straddled vehicle 1 increases to be greater than or equal to a certain value, the on-off valve 58 is switched from the closed state to the opened state.

As illustrated in FIG. 5, in a case where the on-off valve 58 is opened, the exhaust gas can flow to the first branch pipe 56. That is, in a case where the on-off valve 58 is opened, the exhaust gas can be discharged from the exhaust port 71. The first branch pipe 56 is larger in diameter than the second branch pipe 57. Therefore, most of the exhaust gas guided from the engine 31 to the exhaust device 29 flows to the first branch pipe 56 and is discharged to the outside from the exhaust port 71. That is, in a case where the traveling speed of the straddled vehicle 1 is high, the exhaust gas is injected from the exhaust port 71 to generate the jet Hc as illustrated in FIG. 10. The exhaust port 71 is configured to be larger than the exhaust port 73. Therefore, even in a case where the traveling speed of the straddled vehicle 1 is high and the amount of exhaust gas generated is large, the exhaust gas can be efficiently discharged from the large exhaust port 71.

In a case where the exhaust gas is injected from the exhaust port 71, the force acting in the direction of pressing the front wheel 24 against the road surface G becomes smaller as compared with the case where the exhaust gas is injected from the exhaust port 73. However, in a case where the traveling speed of the straddled vehicle 1 is already high, the frequency of performing the operation of rapidly connecting the clutch or the operation of performing sudden acceleration in circuit traveling or the like is low. Therefore, in a case where the traveling speed of the straddled vehicle 1 is high, the possibility that the straddled vehicle 1 enters the wheelie state is low even if the force acting in the direction of pressing the front wheel 24 against the road surface G decreases. Therefore, in a case where the traveling speed of the straddled vehicle 1 is high, the on-off valve 58 is switched to the opened state to discharge the exhaust gas from the exhaust port 71. In circuit traveling or the like, by discharging the exhaust gas from the exhaust port 71 in a case where the traveling speed of the straddled vehicle 1 is high, the exhaust gas can be efficiently discharged while suppressing the straddled vehicle 1 from entering a wheelie state.

The straddled vehicle 1 includes a front wheel 24, a rear wheel 49, and an exhaust device 29. The exhaust device 29 discharges exhaust gas. The exhaust device 29 includes the exhaust port 73. The exhaust port 73 injects the exhaust gas to apply the reaction force F to the front wheel 24. The reaction force F suppresses the front wheel 24 from floating up from the road surface G. That is, the reaction force F acts in a direction of pressing the front wheel 24 against the road surface G. Therefore, the front wheel 24 is prevented from floating up from the road surface G.

In general, as an example, in a case where a driver of a straddled vehicle rapidly opens an accelerator or rapidly connects a clutch in circuit traveling or the like, the straddled vehicle rapidly accelerates. In a case where the conventional straddled vehicle is rapidly accelerated, the front wheel floats up from the road surface, and the straddled vehicle tends to enter a wheelie state. Therefore, in a case where a conventional straddled vehicle is driven, the driver is required to carefully operate the accelerator and the clutch of the straddled vehicle.

On the other hand, in the straddled vehicle 1 according to the first embodiment, the exhaust device 29 injects the exhaust gas from the exhaust port 73 to generate the reaction force F. The reaction force F acts on the front wheel 24. The reaction force F acts in a direction of suppressing the front wheel 24 from floating up from the road surface G. Therefore, in the straddled vehicle 1 according to the first embodiment, it is difficult for the straddled vehicle to enter a wheelie state even in a case where sudden acceleration is performed in circuit traveling or the like as an example. Therefore, in the straddled vehicle 1 according to the first embodiment, the operation of the accelerator and the clutch of the straddled vehicle 1 is supported. Therefore, the driver can easily operate the straddled vehicle 1 according to the first embodiment.

When the straddled vehicle 1 starts, the exhaust port 73 injects the exhaust gas to apply the reaction force F to the front wheel 24. When the straddled vehicle 1 starts, the reaction force F acts in a direction of suppressing the front wheel 24 from floating up from the road surface G. Therefore, as an example, when the straddled vehicle 1 starts in circuit traveling or the like, the straddled vehicle 1 is less likely to enter a wheelie state. Therefore, in circuit traveling or the like, the acceleration performance of the straddled vehicle 1 when the straddled vehicle 1 starts can be easily improved.

As an example, when the straddled vehicle 1 rapidly accelerates in circuit traveling or the like, the exhaust port 73 injects the exhaust gas to apply the reaction force F to the front wheel 24. When the straddled vehicle 1 rapidly accelerates in circuit traveling or the like, the reaction force F acts in a direction of suppressing the front wheel 24 from floating up from the road surface G. Therefore, when the straddled vehicle 1 rapidly accelerates in circuit traveling or the like, the straddled vehicle 1 is less likely to enter a wheelie state. Therefore, in circuit traveling or the like, the acceleration performance of the straddled vehicle 1 when the straddled vehicle 1 rapidly accelerates can be easily improved.

The first force acting in the direction of suppressing the front wheel 24 from floating up from the road surface G is the reaction force F of the jet H of the exhaust gas injected from the exhaust port 73. Therefore, by injecting the exhaust gas from the exhaust port 73, the first force can be easily applied to the front wheel 24.

The exhaust port 73 is configured to eject the exhaust gas backward. Therefore, it is easy for the reaction force F to act in a direction of pressing the front wheel 24 against the road surface F. Therefore, the reaction force F acts in a direction of suppressing the front wheel 24 from floating up from the road surface G.

The exhaust port 73 is disposed above the rotation center of the rear wheel 49. Therefore, it is easier for the reaction force F to act in the direction of pressing the front wheel 24 against the road surface G. Therefore, the reaction force F acts in a direction of further suppressing the front wheel 24 from floating up from the road surface G.

The exhaust port 73 is disposed above the upper end of the rear wheel 49. Therefore, it is easier for the reaction force F to act in the direction of pressing the front wheel 24 against the road surface G. Therefore, the reaction force F acts in a direction of further suppressing the front wheel 24 from floating up from the road surface G.

The reaction force F generates the first moment M1. The first moment M1 acts around the rear contact point T. The first moment M1 acts in a direction of pressing the front wheel 24 against the road surface G. In other words, the first moment M1 moves the front wheel 24 downward with the rear contact point T as a fulcrum. Therefore, the first moment M1 acts in a direction of suppressing the front wheel 24 from floating up from the road surface G. Therefore, the reaction force F acts in a direction of suppressing the front wheel 24 from floating up from the road surface G.

The exhaust port 73 is configured to eject the exhaust gas upward. Therefore, it is easy for the reaction force F to act on the front wheel 24 in the downward direction. Therefore, the reaction force F acts in a direction of suppressing the front wheel 24 from floating up from the road surface G.

The reaction force F includes the first component F1. The first component F1 acts on the front wheel 24 in the downward direction. Therefore, the first component F1 acts in a direction of suppressing the front wheel 24 from floating up from the road surface G. Therefore, the reaction force F acts in a direction of suppressing the front wheel 24 from floating up from the road surface G.

The exhaust device 29 includes an exhaust port 71 for discharging exhaust gas. The exhaust port 73 is smaller than the exhaust port 71. Therefore, it is easy to increase the speed of the exhaust gas injected from the exhaust port 73. Therefore, it is easy to increase the reaction force F.

The exhaust port 73 has a diameter smaller than the diameter of the exhaust port 71. Therefore, it is easy to increase the speed of the exhaust gas injected from the exhaust port 73. Therefore, it is easy to increase the reaction force F. Therefore, the reaction force F acts in a direction of further suppressing the front wheel 24 from floating up from the road surface G.

The exhaust port 73 is disposed above the exhaust port 71. Therefore, it is easier for the reaction force F to act in the direction of pressing the front wheel 24 against the road surface G. Therefore, the reaction force F acts in a direction of further suppressing the front wheel 24 from floating up from the road surface G.

The exhaust device 29 includes the on-off valve 58 that opens and closes the exhaust port 71. Therefore, it is easy to control the injection of the exhaust gas in the exhaust port 71.

In a case where the pressure of the exhaust gas in the exhaust device 29 is less than the predetermined value K1, the on-off valve 58 is configured to close the exhaust port 71. Therefore, in a case where the pressure of the exhaust gas in the exhaust device 29 is less than the predetermined value K1, the exhaust port 71 does not inject the exhaust gas. Therefore, in a case where the pressure of the exhaust gas in the exhaust device 29 is less than the predetermined value K1, it is easy to increase the injection amount of the exhaust gas from the exhaust port 73. Therefore, in a case where the pressure of the exhaust gas in the exhaust device 29 is less than the predetermined value K1, it is easy to increase the reaction force F. Therefore, in a case where the pressure of the exhaust gas in the exhaust device 29 is less than the predetermined value K1, the straddled vehicle 1 is less likely to enter the wheelie state in circuit traveling or the like. As a result, it is easy to improve the acceleration performance of the straddled vehicle 1 in circuit traveling or the like.

For example, when the pressure of the exhaust gas inside the exhaust device 29 is less than the predetermined value K1, the straddled vehicle 1 travels at a low speed. Therefore, when the straddled vehicle 1 travels at a low speed in circuit traveling or the like, the straddled vehicle 1 is less likely to enter a wheelie state.

For example, when the pressure of the exhaust gas inside the exhaust device 29 is less than the predetermined value K1, the straddled vehicle 1 starts. Therefore, when the straddled vehicle 1 starts in circuit traveling or the like, the straddled vehicle 1 is less likely to enter a wheelie state.

For example, when the pressure of the exhaust gas inside the exhaust device 29 is less than the predetermined value K1, the straddled vehicle 1 rapidly accelerates in circuit traveling or the like as an example. Therefore, when the straddled vehicle 1 rapidly accelerates in circuit traveling or the like, the straddled vehicle 1 is less likely to enter a wheelie state.

In a case where the pressure of the exhaust gas in the exhaust device 29 is greater than or equal to the predetermined value K1, the on-off valve 58 is configured to open the exhaust port 71. Therefore, in a case where the pressure of the exhaust gas in the exhaust device 29 is greater than or equal to the predetermined value K1, the on-off valve 58 is switched to the opened state to discharge the exhaust gas from the exhaust port 71. By discharging the exhaust gas from the exhaust port 71, the discharge efficiency of the exhaust gas is greatly improved. As a result, by controlling the opening and closing of the on-off valve 58 according to the height of the pressure of the exhaust gas, it is possible to suppress the straddled vehicle 1 from enter a wheelie state in circuit traveling or the like while improving the discharge efficiency of the exhaust gas in the straddled vehicle 1.

For example, when the pressure of the exhaust gas inside the exhaust device 29 is greater than or equal to the predetermined value K1, the straddled vehicle 1 travels at a high speed. Therefore, when the straddled vehicle 1 travels at a high speed, the discharge efficiency of the exhaust gas in the straddled vehicle 1 can be improved.

In addition, in the straddled vehicle 1 according to the first embodiment, the exhaust gas is injected from the exhaust port 73 of the exhaust device 29 to generate a force acting in a direction of pressing the front wheel 24 downward. That is, by injecting the exhaust gas from the exhaust port 73, the straddled vehicle 1 is prevented from entering a wheelie state in circuit traveling or the like as an example. The device for discharging the exhaust gas is generally provided in the straddled vehicle 1. Therefore, it is not necessary to mount a new device for generating a force acting in a direction of pressing the front wheel 24 downward on the straddled vehicle 1 in addition to the exhaust device 29. Therefore, it is possible to prevent the straddled vehicle 1 from entering a wheelie state in circuit traveling or the like while avoiding complication of the straddled vehicle 1. That is, it is possible to realize the straddled vehicle 1 capable of suppressing the wheelie state in circuit traveling or the like at a lower cost. By effectively using the exhaust gas inevitably generated in a case where the straddled vehicle 1 is driven, it is possible to suppress the straddled vehicle 1 from entering a wheelie state in circuit traveling or the like as an example. That is, the exhaust device 29 can contribute to the posture control of the straddled vehicle 1 by effectively utilizing the exhaust gas. Therefore, it is possible to realize the straddled vehicle 1 capable of suppressing the wheelie state in circuit traveling or the like while considering the global environment.

[Second Embodiment]

Next, a second embodiment of the present invention will be described. Note that the same components as those of the straddled vehicle 1 according to the first embodiment are denoted by the same reference numerals, and different components will be described in detail. The configuration of the exhaust device 29 according to the second embodiment is the same as that of the first embodiment. The positions where the exhaust port 71 and the exhaust port 73 are disposed in the second embodiment are also the same as those in the first embodiment.

<Configuration of On-Off Valve and Control System>

As a configuration in the second embodiment different from that of the first embodiment, there is an on-off valve 58. In the first embodiment, a spring-type valve is used as the on-off valve 58. When the exhaust gas having the pressure increased to be greater than or equal to the predetermined value K1 acts on the on-off valve 58, the on-off valve 58 is pushed open by the pressure of the exhaust gas. That is, in the first embodiment, the opening/closing operation of the on-off valve 58 is adjusted according to the height of the pressure of the exhaust gas. On the other hand, in a straddled vehicle 1A according to the second embodiment, an electric valve is used as the on-off valve 58. In the second embodiment, the ECU 75 is configured to control the opening/closing operation of the on-off valve 58. That is, the on-off valve 58 is reversibly switched from the closed state illustrated in FIG. 4 to the opened state illustrated in FIG. 5 by the control of the ECU 75.

FIG. 12 is a functional block diagram for explaining a control system in the straddled vehicle 1A according to the second embodiment. In the second embodiment, as in the first embodiment, the ECU 75 includes a CPU 77 and a storage unit 79. The straddled vehicle 1A includes an IMU 81. The IMU 81 detects the posture of the straddled vehicle 1A. Information detected by the IMU 81 is transmitted to the ECU 75. Information detected by various sensors such as the accelerator opening degree sensor 61, the stroke sensor 64, the throttle valve opening degree sensor 65, the speed sensor 66, the acceleration sensor 68, the crankshaft position sensor 69, and the pressure sensor 70 is configured to be transmitted to the ECU 75.

However, in the second embodiment, unlike the first embodiment, the on-off valve 58 is electrically connected to the ECU 75 as illustrated in FIG. 12. Then, the ECU 75 controls an opening/closing operation of the on-off valve 58.

The ECU 75 determines whether a predetermined closing condition or opening condition is satisfied. In a case where the ECU 75 determines that the closing condition is satisfied, the ECU 75 performs control to switch the on-off valve 58 to the closed state. On the other hand, in a case where the ECU 75 determines that the opening condition is satisfied, the ECU 75 performs control to switch the on-off valve 58 to the opened state. The closing condition is a condition for performing control of switching the on-off valve 58 to a closed state and injecting the exhaust gas from the exhaust port 73. The opening condition is a condition for performing control of switching the on-off valve 58 to the opened state and injecting the exhaust gas from the exhaust port 71.

In the second embodiment, the ECU 75 determines which one of the closing condition and the opening condition is satisfied on the basis of the information detected by the IMU 81 and the stroke sensor 64. In the second embodiment, in a case where the pitch angle of the straddled vehicle 1A is greater than or equal to a predetermined value K2 or in a case where the stroke amount of the front fork 14 is greater than or equal to a predetermined value K3, the ECU 75 determines that the closing condition is satisfied. On the other hand, in a case where the pitch angle of the straddled vehicle 1A is less than the predetermined value K2 and the stroke amount of the front fork 14 is less than the predetermined value K3, the ECU 75 determines that the opening condition is satisfied.

In other words, in the second embodiment, the closing condition of the on-off valve 58 includes the following two conditions. A first closing condition is that the pitch angle of the straddled vehicle 1A is greater than or equal to the predetermined value K2. A second closing condition is that the stroke amount of the front fork 14 is greater than or equal to the predetermined value K3. In the second embodiment, in a case where any one of the two closing conditions is satisfied, the ECU 75 determines that the closing condition of the on-off valve 58 is satisfied. On the other hand, in a case where the closing condition of the on-off valve 58 is not satisfied, the ECU 75 determines that the opening condition of the on-off valve 58 is satisfied.

The IMU 81 detects the pitch angle of the straddled vehicle 1A. That is, the IMU 81 can detect the inclination of the straddled vehicle 1A in the front-rear direction X. As illustrated in FIG. 12, information detected by the IMU 81 is transmitted to the ECU 75. As a precursor of entering the wheelie state of the straddled vehicle 1A in circuit traveling or the like, the front portion of the straddled vehicle 1A moves upward from the rear portion of the straddled vehicle 1A. Therefore, in a case where the pitch angle of the straddled vehicle 1A is greater than or equal to the predetermined value K2, the ECU 75 can determine that the straddled vehicle 1A is highly likely to enter the wheelie state in the near future. In other words, in a case where the IMU 81 detects that the front portion of the straddled vehicle 1A moves upward more than the rear portion of the straddled vehicle 1A by the predetermined value K2 or more, the ECU 75 determines that the closing condition is satisfied.

The closing condition is also a condition under which it is determined that the straddled vehicle 1A is highly likely to enter the wheelie state in the near future.

The stroke sensor 64 detects a stroke amount of the front fork 14. As illustrated in FIG. 12, information detected by the stroke sensor 64 is transmitted to the ECU 75. In circuit traveling or the like, the front fork 14 extends as a precursor of the wheelie state in which the front wheel 24 rises from the road surface G. That is, the stroke amount of the front fork 14 increases as a precursor of the wheelie state of the straddled vehicle 1 in circuit traveling or the like. Therefore, in a case where the stroke sensor 64 detects that the stroke amount of the front fork 14 is greater than or equal to the predetermined value K3, the ECU 75 can determine that the straddled vehicle 1 is highly likely to enter a wheelie state in the near future. In other words, in a case where the stroke sensor 64 detects that the stroke amount of the front fork 14 is greater than or equal to the predetermined value K3, the ECU 75 determines that the closing condition is satisfied.

<Control of On-Off Valve according to Second Embodiment>

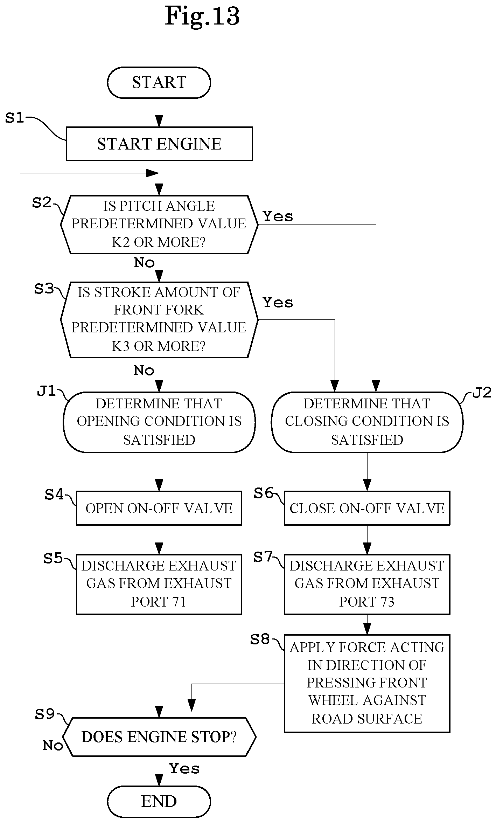

Here, while describing the operation of the straddled vehicle 1A according to the second embodiment, details of control for switching the on-off valve 58 from the closed state to the opened state according to the second embodiment will be described. FIG. 13 is a flowchart illustrating the operation of the straddled vehicle 1A according to the second embodiment.

Step S1

In a case where the operation of the straddled vehicle 1A starts, the driver causes the engine 31 to start. After starting the engine 31, the driver causes the straddled vehicle 1A to travel.

Step S2

When the straddled vehicle 1A starts traveling, the ECU 75 constantly monitors which of the closing condition of the on-off valve 58 and the opening condition of the on-off valve 58 is satisfied. First, in step S2, the ECU 75 determines whether the closing condition of the on-off valve 58 is satisfied on the basis of the information transmitted from the IMU 81. The IMU 81 constantly detects the pitch angle of the straddled vehicle 1A. Then, the IMU 81 transmits information of the detected pitch angle to the ECU 75 as needed.

The ECU 75 reads information of the predetermined value K2 stored in advance in the storage unit 79. The ECU 75 compares the pitch angle of the straddled vehicle 1A with the predetermined value K2. Then, the ECU 75 branches the process according to the value of the pitch angle of the straddled vehicle 1A. In a case where the pitch angle of the straddled vehicle 1A is greater than or equal to the predetermined value K2, the ECU 75 determines that the closing condition of the on-off valve 58 is satisfied (see reference numeral J2 in FIG. 13). In the second embodiment, the pitch angle of the straddled vehicle 1A being greater than or equal to the predetermined value K2 corresponds to the first closing condition. In a case where it is determined that the closing condition of the on-off valve 58 is satisfied, the ECU 75 shifts the process to step S6. The process of step S6 will be described later.

On the other hand, in a case where the pitch angle of the straddled vehicle 1A is less than the predetermined value K2, the ECU 75 shifts the process to step S3.

Step S3

In a case where the pitch angle of the straddled vehicle 1A is less than the predetermined value K2, the ECU 75 determines whether the closing condition of the on-off valve 58 is satisfied on the basis of the information transmitted from the stroke sensor 64. The stroke sensor 64 constantly detects the stroke amount of the front fork 14. Then, the stroke sensor 64 transmits information of the detected stroke amount to the ECU 75 as needed.

The ECU 75 reads information of the predetermined value K3 stored in advance in the storage unit 79. The ECU 75 compares the stroke amount of the front fork 14 with the predetermined value K3. Then, the ECU 75 branches the process according to the value of the stroke amount of the front fork 14. In a case where the stroke amount of the front fork 14 is be greater than or equal to the predetermined value K3, the ECU 75 determines that the closing condition of the on-off valve 58 is satisfied (see reference numeral J2 in FIG. 13). In the second embodiment, the stroke amount of the front fork 14 being the predetermined value K3 corresponds to the second closing condition. In a case where it is determined that the closing condition of the on-off valve 58 is satisfied, the ECU 75 shifts the process to step S6. The process of step S6 will be described later.

On the other hand, in a case where the stroke amount of the front fork 14 is less than the predetermined value K3, the ECU 75 determines that both the closing conditions of the on-off valve 58 are not satisfied. That is, the ECU 75 determines that the closing condition of the on-off valve 58 is not satisfied for both the pitch angle of the straddled vehicle 1A and the stroke amount of the front fork 14. In a case where it is determined that the closing condition of the on-off valve 58 is not satisfied for both the pitch angle of the straddled vehicle 1A and the stroke amount of the front fork 14, the ECU 75 determines that the opening condition of the on-off valve 58 is satisfied (see reference numeral J1 in FIG. 13). In a case where it is determined that the opening condition of the on-off valve 58 is satisfied, the ECU 75 shifts the process to step S4.

Step S4

In a case where it is determined in step S3 that the opening condition of the on-off valve 58 is satisfied, the process of step S4 is started. In step S4, the ECU 75 performs control to open the on-off valve 58. That is, the on-off valve 58 which is an electric valve is controlled by the ECU 75 and is switched to an opened state.

Step S5

When the on-off valve 58 is switched to the opened state, as illustrated in FIG. 5, the exhaust gas guided to the exhaust device 29 via the guide port 59 can flow to the first branch pipe 56. That is, in a case where the on-off valve 58 is opened, the exhaust gas can be discharged from the exhaust port 71. The first branch pipe 56 is larger in diameter than the second branch pipe 57. Therefore, most of the exhaust gas guided from the engine 31 to the exhaust device 29 flows to the first branch pipe 56 and is discharged to the outside from the exhaust port 71.

That is, in a case where the opening condition of the on-off valve 58 is satisfied, the exhaust gas is injected from the exhaust port 71 to generate the jet Hc as illustrated in FIG. 10. In other words, as an example, in a case where it is determined that the straddled vehicle 1A is less likely to enter the wheelie state in circuit traveling or the like, the ECU 75 switches the on-off valve 58 to the opened state and discharges the exhaust gas from the exhaust port 71. The exhaust port 71 is configured to be larger than the exhaust port 73. Therefore, the exhaust gas can be efficiently discharged from the large exhaust port 71.

As described above, in a case where the opening condition of the on-off valve 58 is satisfied, the processes of steps S4 and S5 are performed. As a result, as illustrated in FIGS. 5 and 10, the on-off valve 58 is switched to the opened state, and the exhaust gas is efficiently discharged from the exhaust port 71. The exhaust gas discharged from the exhaust port 71 is injected rearward in the front-rear direction X in a vehicle side view, and the jet Hc is generated. Thereafter, the process proceeds to step S9.

Step S6

On the other hand, in a case where it is determined in step S2 or step S3 that the closing condition of the on-off valve 58 is satisfied, the process of step S6 is started. In step S6, the ECU 75 performs control to close the on-off valve 58. That is, the on-off valve 58 which is an electric valve is controlled by the ECU 75 and is switched to a closed state.

Step S7

When the on-off valve 58 is switched to the closed state, as illustrated in FIG. 4, the exhaust gas guided to the exhaust device 29 via the guide port 59 cannot flow to the first branch pipe 56. Therefore, all the exhaust gas guided from the engine 31 to the exhaust device 29 is sent to the second branch pipe 57 and discharged to the outside from the exhaust port 73. When the exhaust gas is discharged from the exhaust port 73, as illustrated in FIG. 7, the jet H is generated at the start point Ce corresponding to the exhaust port 73.

Step S8

The exhaust port 73 is configured to discharge the exhaust gas rearward and upward in a vehicle side view. That is, the jet H is a flow directed rearward and upward in a vehicle side view. Therefore, in a case where the exhaust gas is injected from the exhaust port 73, the reaction force F generated by the jet H includes the downward first component force F1. Therefore, by injecting the exhaust gas from the exhaust port 73, the first component force F1 of the reaction force F acts in a direction of pressing the front wheel 24 against the road surface G as illustrated in FIG. 8.

The position and the direction of the exhaust port 73 are determined such that the jet H flows rearward and upward in a vehicle side view with the rear contact point T as the center. Therefore, the reaction force F generated by the jet H is a force directed forward and downward in a vehicle side view with the rear contact point T as the center. Therefore, as illustrated in FIG. 9, in a case where the exhaust gas is injected from the exhaust port 73, a first moment M1 directed forward and downward with the rear contact point T as a fulcrum is generated by the reaction force F. The first moment M1 further acts in a direction of pressing the front wheel 24 against the road surface G.

The exhaust port 73 is disposed above the exhaust port 71. That is, as illustrated in FIGS. 9 and 11, the distance Ds from the rear contact point T to the exhaust port 73 is longer than the distance Dk from the rear contact point T to the exhaust port 71. Therefore, in a case where the exhaust gas is injected from the exhaust port 73, the magnitude of the first moment M1 directed forward and downward with the rear contact point T as a fulcrum becomes stronger. Therefore, when the first moment M1 is generated by the reaction force F of the jet H, the force in the direction of pressing the front wheel 24 against the road surface G further increases.

As described above, in a case where the closing condition of the on-off valve 58 is satisfied, the processes of steps S6 and S7 are performed. As a result, as illustrated in FIGS. 4 and 8, the on-off valve 58 is switched to the closed state, and the exhaust gas is discharged from the exhaust port 73. The exhaust gas discharged from the exhaust port 73 is injected backward and upward in a vehicle side view, and the jet H is generated. Each of the first component force F1 included in the reaction force F of the jet H and the first moment M1 generated by the reaction force F of the jet H acts in a direction of pressing the front wheel 24 against the road surface G. In other words, by discharging the exhaust gas from the exhaust port 73, the force in the direction of pressing the front wheel 24 against the road surface G is increased. As a result, the first component force F1 and the first moment M1 prevent the front wheel 24 of the straddled vehicle 1A from floating up from the road surface G and entering the wheelie state in circuit traveling or the like. After generating a force in a direction in which the front wheel 24 presses the road surface G by injecting the exhaust gas from the exhaust port 73, the process proceeds to step S9.

Step S9

After the ECU 75 performs control to switch the on-off valve 58 to the closed state or the opened state, the process is branched depending on the operation status of the engine 31. In a case where the engine 31 is stopped, monitoring of the closing condition and the opening condition by the ECU 75 is stopped. On the other hand, in a case where the operation of the engine 31 is continued, the process branches to step S2. That is, monitoring of the closing condition and the opening condition by the ECU 75 is continued. Then, the processes from step S2 to step S9 are appropriately repeated. The series of processes ends by stopping the engine 31.

<Effects of Second Embodiment>

The straddled vehicle 1A includes an ECU 75, a stroke sensor 64, and an IMU 81. The stroke sensor 64 and the IMU 81 detect the state of the straddled vehicle 1A. The ECU 75 controls the on-off valve 58 on the basis of the detection results of the stroke sensor 64 and the IMU 81. Therefore, it is easy to control the injection of the exhaust gas in the exhaust port 71 according to the state of the straddled vehicle 1A.

The ECU 75 determines whether the front wheel 24 is likely to float up from the road surface G on the basis of the detection results of the stroke sensor 64 and the IMU 81. In a case where the ECU 75 determines that the front wheel 24 is likely to float up from the road surface G, the ECU 75 is configured to close the on-off valve 58. Therefore, in a case where the front wheel 24 is likely to float up from the road surface G, it is easy to increase the injection amount of the exhaust gas from the exhaust port 73. Therefore, in a case where the front wheel 24 is likely to float up from the road surface G, it is easy to increase the reaction force F. Therefore, even in a case where the front wheel 24 is likely to float up from the road surface G, the reaction force F acts in a direction of suppressing the front wheel 24 from floating up from the road surface G.

The IMU 81 detects the pitch angle of the straddled vehicle 1A. The stroke sensor 64 detects a stroke amount of the front fork 14 that supports the front wheel 24. In this case, it is easy for the stroke sensor 64 and the IMU 81 to detect the posture of the straddled vehicle 1A. Therefore, it is easy for the ECU 75 to control the on-off valve 58 according to the posture of the straddled vehicle 1A.

Specifically, the ECU 75 is configured to control opening and closing of the on-off valve 58 on the basis of the stroke amount of the front fork 14 and the pitch angle of the straddled vehicle 1A. When the stroke amount of the front fork 14 or the value of the pitch angle of the straddled vehicle 1A becomes greater than or equal to a predetermined value, there is a high possibility that the front wheel 24 floats up from the road surface G and the straddled vehicle 1A enters the wheelie state in circuit traveling or the like.

Therefore, the ECU 75 is configured to determine that the closing condition of the on-off valve 58 is satisfied when the stroke amount of the front fork 14 or the value of the pitch angle of the straddled vehicle 1A becomes greater than or equal to a predetermined value as a trigger. In a case where it is determined that the closing condition of the on-off valve 58 is satisfied, the ECU 75 switches the on-off valve 58 to the closed state. By switching the on-off valve 58 to the closed state, the place where the exhaust gas is discharged from the exhaust device 29 is switched from the exhaust port 71 to the exhaust port 73.

By discharging the exhaust gas from the exhaust port 73, the first component force F1 and the first moment M1 are generated due to the reaction force F of the jet H. The first component force F1 and the first moment M1 act as a force that presses the front wheel 24 against the road surface G. As a result, the first component force F1 and the first moment M1 can prevent the straddled vehicle 1A from being in a wheelie state in circuit traveling or the like. As described above, in the second embodiment, when it is determined that the straddled vehicle 1A is highly likely to be in a wheelie state in circuit traveling or the like, the ECU 75 automatically switches the on-off valve 58 to the closed state and quickly generates a force acting in a direction of pressing the front wheel 24 against the road surface G. As a result, even in a case where the straddled vehicle 1A falls into a situation in which the straddled vehicle 1A is highly likely to enter the wheelie state in circuit traveling or the like, the control executed by the ECU 75 can further suppress the straddled vehicle 1A from entering the wheelie state.

[Third Embodiment]

Next, a straddled vehicle 1B according to a third embodiment of the present invention will be described. In the first embodiment and the second embodiment, a configuration in which two types of forces of the first component force F1 and the first moment M1 are generated as forces acting in a direction of pressing the front wheel 24 against the road surface G is described as an example. In the third embodiment, a configuration in which only the first component force F1 is generated as the force acting in the direction of pressing the front wheel 24 against the road surface G will be described as an example. Note that the control of switching the opened/closed state of the on-off valve 58 in the third embodiment is similar to that in the first embodiment or the second embodiment, and thus the description thereof is omitted.

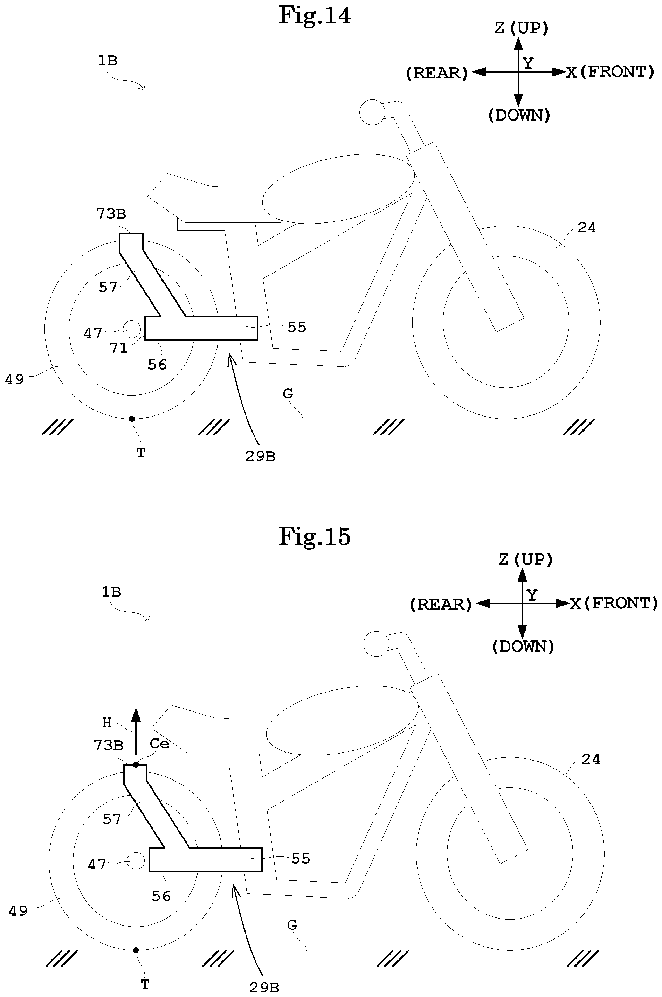

As illustrated in FIG. 14, an exhaust device 29B according to the third embodiment includes an exhaust port 71 provided in the first branch pipe 56 and an exhaust port 73B provided in the second branch pipe 57. The exhaust port 73B according to the third embodiment is different from the exhaust port 73 according to the first embodiment in the direction in which the exhaust gas is discharged. The exhaust port 73B is configured to discharge the exhaust gas upward in the up-down direction Z. That is, the exhaust port 73B is configured to face upward in the up-down direction Z. The exhaust device 29B is attached to the frame of the straddled vehicle 1B such that the exhaust port 73B is disposed above the rear axle 47 in the up-down direction Z. In other words, the exhaust device 29B is attached to the frame of the straddled vehicle 1B such that the exhaust port 73B is disposed on the extension line between the rear contact point T and the rear axle 47.

The exhaust port 73B is configured to discharge the exhaust gas upward in the up-down direction Z. That is, when the exhaust gas is discharged from the exhaust port 73B to the outside of the exhaust device 29B, the jet H of the exhaust gas flows upward in the up-down direction Z as illustrated in FIG. 15. In other words, in the third embodiment, the jet H of the exhaust gas flows upward in the vertical direction.

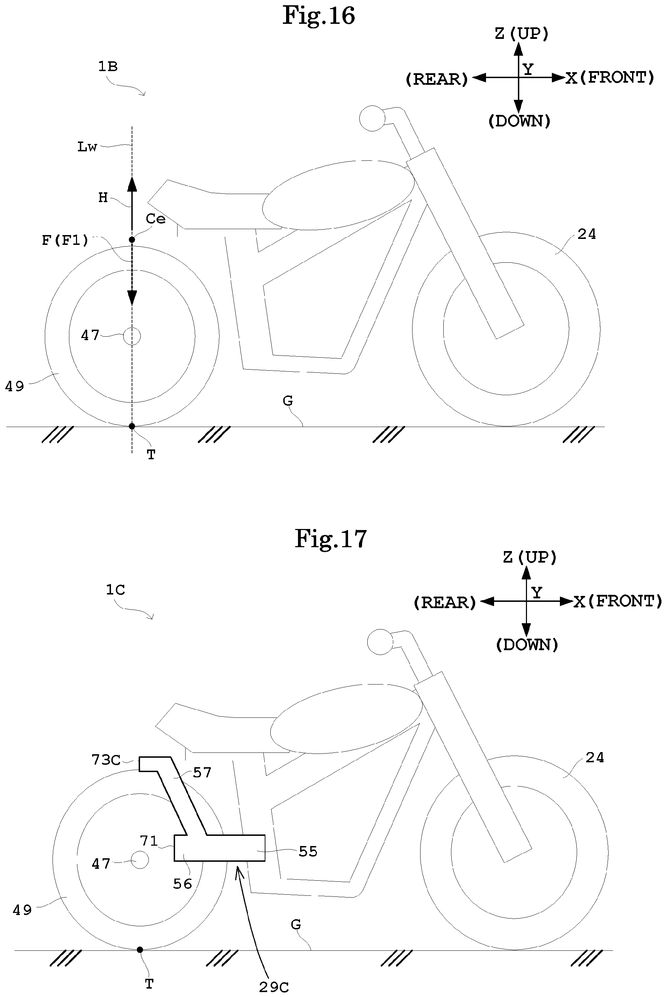

When the exhaust gas is injected from the exhaust port 73B to generate the jet H, the reaction force F of the jet H acts on the straddled vehicle 1B as illustrated in FIG. 16. In FIG. 16, the exhaust device 29B is omitted for convenience of description. The reaction force F has a direction opposite to that of the jet H. Therefore, the reaction force F generated in the third embodiment is a force acting downward from the start point Ce in the up-down direction Z. Therefore, the first component force F1 acting downward from the start point Ce is equal to the reaction force F. In the third embodiment, the component force (second component force F2) directed in the front-rear direction X in the component force of the reaction force F becomes zero.

In other words, in a case where the direction of the reaction force F is downward from the start point Ce in the up-down direction Z, the first component force F1, which is a force acting in a direction of pressing the front wheel 24 against the road surface G, becomes maximum. In this manner, by arranging the exhaust port 73B such that the jet H of the exhaust gas flows upward in the vertical direction, the first component force F1 can be further increased. As the first component force F1 increases, it is possible to suppress the straddled vehicle 1B from entering a wheelie state in circuit traveling or the like.

The third embodiment is different from the first embodiment in that the first moment M1 is not generated in a case where the exhaust gas is discharged from the exhaust port 73B. The exhaust port 73B is disposed above the rear axle 47 in the up-down direction Z. The rear axle 47 is disposed above the rear contact point T in the up-down direction Z. Therefore, the reaction force F becomes a force directed from the start point Ce toward the rear contact point T. Therefore, the angle N formed by the direction of the reaction force F and the straight line Lw is zero. Therefore, the component force (third component force F3) of the reaction force F in the direction orthogonal to the straight line Lw becomes zero. In the third embodiment, since the third component force F3 is zero, the magnitude of the first moment M1 is also zero.

As described above, in the third embodiment, the exhaust gas is injected from the exhaust port 73B to generate the first component force F1 acting downward in the up-down direction Z. By generating the first component force F1, the force acting in the direction of pressing the front wheel 24 against the road surface G increases. Therefore, by injecting the exhaust gas from the exhaust port 73B, it is possible to suppress the straddled vehicle 1B from entering a wheelie state in circuit traveling or the like.

In the third embodiment, by disposing the exhaust port 73B upward in the up-down direction Z, the first component force F1 generated in a case where the exhaust gas is injected from the exhaust port 73B can be further increased. Therefore, it is possible to prevent the straddled vehicle 1B from entering a wheelie state in circuit traveling or the like.

[Fourth Embodiment]

Next, a straddled vehicle 1C according to a fourth embodiment of the present invention will be described. In the first embodiment and the second embodiment, a configuration in which two types of forces of the first component force F1 and the first moment M1 are generated as forces acting in a direction of pressing the front wheel 24 against the road surface G is described as an example. In the fourth embodiment, a configuration in which only the first moment M1 is generated as the force acting in the direction of pressing the front wheel 24 against the road surface G will be described as an example. Note that the control of switching the opened-/closed state of the on-off valve 58 in the fourth embodiment is similar to that in the first embodiment or the second embodiment, and thus the description thereof is omitted.

As illustrated in FIG. 17, an exhaust device 29C according to the fourth embodiment includes an exhaust port 71 provided in the first branch pipe 56 and an exhaust port 73C provided in the second branch pipe 57. The exhaust port 73C according to the fourth embodiment is different from the exhaust port 73 according to the first embodiment in the direction in which the exhaust gas is discharged. The exhaust port 73C is configured to discharge the exhaust gas backward in the front-rear direction X. That is, the exhaust port 73C is configured to face rearward in the front-rear direction X. The exhaust device 29C is attached to the frame of the straddled vehicle 1C such that the exhaust port 73C is disposed above the rear axle 47 in the up-down direction Z. In other words, the exhaust device 29C is attached to the frame of the straddled vehicle 1C such that the exhaust port 73C is disposed on the extension line between the rear contact point T and the rear axle 47.

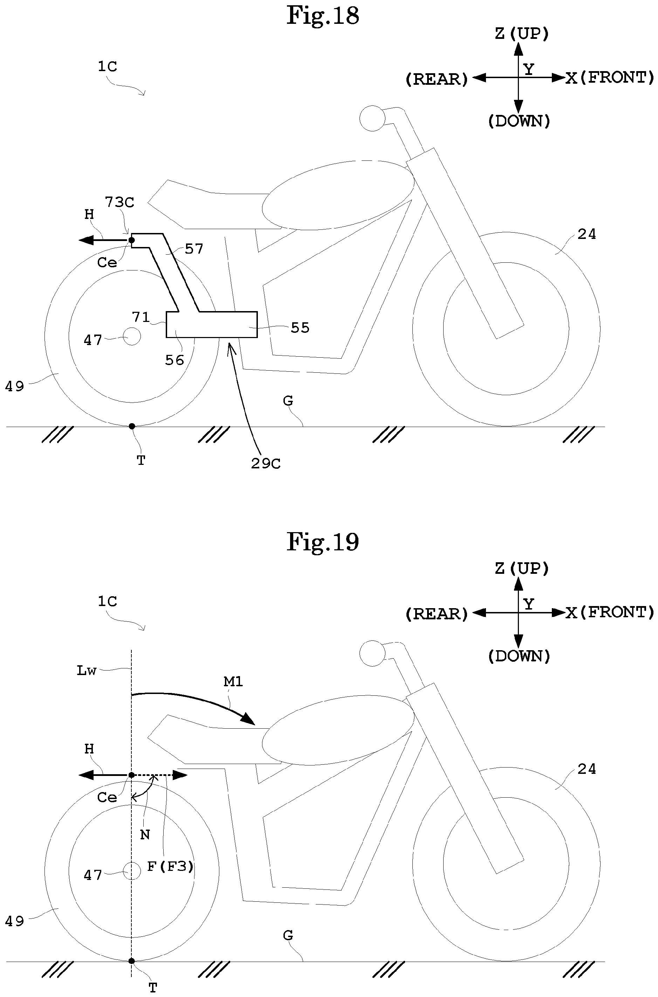

The exhaust port 73C is configured to discharge the exhaust gas backward in the front-rear direction X. That is, when the exhaust gas is discharged from the exhaust port 73C to the outside of the exhaust device 29C, the jet H of the exhaust gas flows backward in the front-rear direction X as illustrated in FIG. 18. In other words, in the fourth embodiment, the jet H of the exhaust gas flows backward in the horizontal direction.

When the exhaust gas is injected from the exhaust port 73C to generate the jet H, the reaction force F of the jet H acts on the straddled vehicle 1C as illustrated in FIG. 19. In FIG. 19, the exhaust device 29C is omitted for convenience of description. The reaction force F has a direction opposite to that of the jet H. Therefore, the reaction force F generated in the fourth embodiment is a force acting forward from the start point Ce in the front-rear direction X. Therefore, in the fourth embodiment, among the component forces of the reaction force F, the component force (first component force F1) directed downward in the up-down direction Z becomes zero.

On the other hand, in the fourth embodiment, as illustrated in FIG. 19, the first moment M1 is generated by the reaction force F. In the fourth embodiment, the exhaust port 73C is disposed above the rear axle 47 in the up-down direction Z. That is, in the fourth embodiment, the start point Ce exists above the rear axle 47 in the up-down direction Z. The rear axle 47 is disposed above the rear contact point T in the up-down direction Z. That is, the straight line Lw connecting the start point Ce and the rear contact point T is in the same direction as the up-down direction Z.

In the fourth embodiment, the reaction force F is a force acting forward from the start point Ce in the front-rear direction X. Therefore, the reaction force F and the straight line Lw are orthogonal to each other. In other words, the angle N formed by the direction of the reaction force F and the straight line Lw is 90°. In a case where the angle N is 90°, the reaction force F is equal to the third component force F3. In other words, in a case where the angle N is 90°, the magnitude of the third component force F3 is maximized. Therefore, by disposing the exhaust device 29C such that the straight line Lw connecting the start point Ce and the rear contact point T is orthogonal to the reaction force F, the first moment M1 can be made stronger. Therefore, it is possible to prevent the straddled vehicle 1C from entering a wheelie state in circuit traveling or the like.

The correspondence between the above-described first to fourth embodiments and the configuration of the present invention is as follows.

The exhaust port 73 corresponds to a first exhaust port in the present invention. The exhaust port 71 corresponds to a main exhaust port in the present invention. The on-off valve 58 corresponds to a main valve in the present invention. The reaction force F corresponds to a first force in the present invention. The first component force F1 corresponds to a first component in the present invention. The IMU 81 corresponds to a first sensor in the present invention. The stroke sensor 64 corresponds to a second sensor in the present invention. The accelerator opening degree sensor 61, the stroke sensor 64, the throttle valve opening degree sensor 65, the speed sensor 66, the acceleration sensor 68, the crankshaft position sensor 69, the pressure sensor 70, and the IMU 81 correspond to detection units in the present invention. The ECU 75 corresponds to a main valve control unit in the present invention.

The present invention is not limited to the above embodiments, and can be modified as follows.

(1) In each of the first to fourth embodiments, as illustrated in FIGS. 1 and 2, the exhaust device 29 is disposed on the right side of the rear wheel 49. However, the present invention is not limited thereto. For example, the exhaust device 29 may be disposed on the left of the rear wheel 49. In addition, the exhaust device 29 may be disposed at a position overlapping the rear wheel 49 in vehicle front view. As an example of the configuration in which the exhaust device 29 is disposed at a position overlapping with the rear wheel 49 in vehicle front view, a configuration in which the exhaust device 29 is disposed in front of the rear wheel 49 can be exemplified.

(2) In each embodiment, the exhaust port 71 is configured to discharge the exhaust gas backward in the front-rear direction X. That is, the exhaust port 71 is configured to exhaust the exhaust gas in a direction parallel to the front-rear direction X which is the horizontal direction. However, the present invention is not limited thereto. As an example, the exhaust port 71 may be configured to discharge the exhaust gas backward and upward in a vehicle side view. In addition, the exhaust port 71 may be configured to discharge the exhaust gas backward and downward in a vehicle side view. Further, the exhaust port 71 may discharge the exhaust gas downward in the up-down direction Z. The exhaust port 71 may discharge the exhaust gas leftward or rightward in the width direction Y.

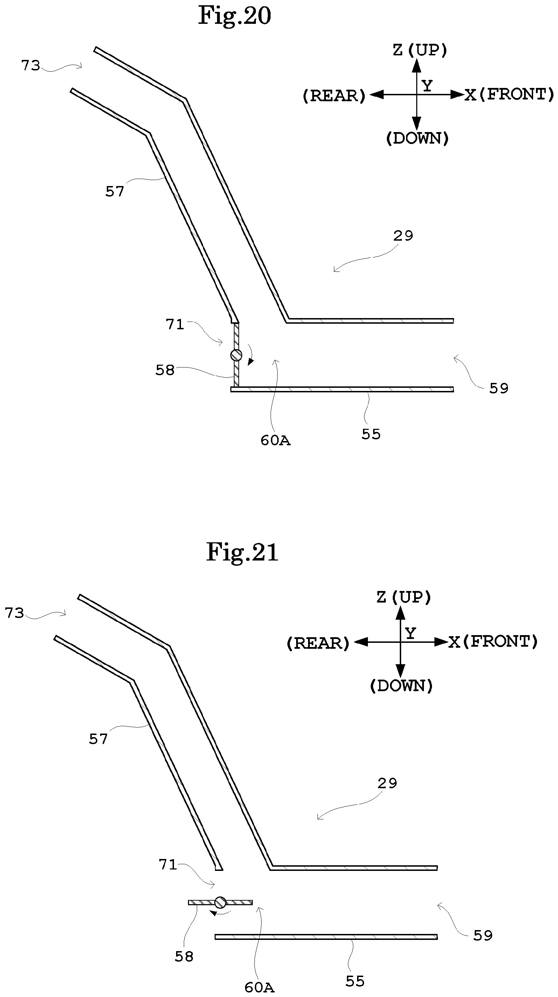

(3) In each embodiment, the exhaust device 29 branches into the first branch pipe 56 and the second branch pipe 57 at the branch portion 60. However, the present invention is not limited thereto. As an example, as illustrated in FIGS. 20 and 21, the first branch pipe 56 may be omitted in the exhaust device 29. In the modification illustrated in FIGS. 20 and 21, the junction pipe 55 extending in the front-rear direction X and the second branch pipe 57 extending rearward and upward in a vehicle side view are connected at a connecting portion 60A. The exhaust port 71 and the on-off valve 58 are disposed in the connecting portion 60A. As an example, the exhaust port 71 is configured to discharge the exhaust gas backward in the front-rear direction X. FIG. 20 illustrates a state in which the closing condition of the on-off valve 58 is satisfied and the on-off valve 58 is closed. FIG. 21 illustrates a state in which the opening condition of the on-off valve 58 is satisfied and the on-off valve 58 is opened.

In a case where the closing condition of the on-off valve 58 is satisfied, the exhaust port 71 is closed by the on-off valve 58 as illustrated in FIG. 20. In a case where the exhaust port 71 is closed, the exhaust gas guided to the exhaust device 29 is guided to the second branch pipe 57. Then, the exhaust gas is discharged from the exhaust port 73 disposed in the second branch pipe 57. In a case where the opening condition of the on-off valve 58 is satisfied, the exhaust port 71 is opened as illustrated in FIG. 21. In a case where the exhaust port 71 is in the opened state, the exhaust gas guided to the exhaust device 29 is discharged from the exhaust port 71.

(4) In the first embodiment, the closing condition of the on-off valve 58 is that the pressure of the exhaust gas in the exhaust device 29 is less than the predetermined value K1. In the second embodiment, the closing condition of the on-off valve 58 is that the pitch angle of the straddled vehicle 1A is greater than or equal to the predetermined value K2 or that the stroke amount of the front fork 14 is the predetermined value K3. However, the closing condition of the on-off valve 58 is not limited thereto. That is, the configuration for determining the closing condition of the on-off valve 58 is not limited to the configuration for determining the closing condition on the basis of the pressure of the exhaust gas, the pitch angle of the straddled vehicle 1A, or the stroke amount of the front fork 14. Other configurations for determining the closing condition of the on-off valve 58 include the following configurations.

First, a configuration is exemplified in which the closing condition of the on-off valve 58 is determined on the basis of the operation amount of the accelerator grip 21. The accelerator opening degree sensor 61 detects an operation amount of the accelerator grip 21. As illustrated in FIGS. 6 and 12, information detected by the accelerator opening degree sensor 61 is transmitted to the ECU 75. As an example, in a case where the operation amount of the accelerator grip 21 by the driver is large in circuit traveling or the like, the straddled vehicle 1 rapidly accelerates. When the straddled vehicle 1 rapidly accelerates, the straddled vehicle 1 tends to enter a wheelie state. Therefore, in a case where the accelerator opening degree sensor 61 detects that the operation amount of the accelerator grip 21 is greater than or equal to a predetermined value K4, the ECU 75 can determine that the straddled vehicle 1 is likely to enter the wheelie state in the near future. In other words, in a case where the operation amount of the accelerator grip 21 is greater than or equal to the predetermined value K4, the ECU 75 can determine that the closing condition of the on-off valve 58 is satisfied.

Second, a configuration is exemplified in which the closing condition of the on-off valve 58 is determined on the basis of the opening degree of the throttle valve. The throttle valve opening degree sensor 65 detects the opening degree of the throttle valve. As illustrated in FIGS. 6 and 12, information detected by the throttle valve opening degree sensor 65 is transmitted to the ECU 75. The acceleration operation is also an operation in which the opening degree of the throttle valve increases. That is, as an example, in a case where the opening degree of the throttle valve is large in circuit traveling or the like, the straddled vehicle 1 rapidly accelerates. When the straddled vehicle 1 rapidly accelerates, the straddled vehicle 1 tends to enter a wheelie state. Therefore, in a case where the throttle valve opening degree sensor 65 detects that the opening degree of the throttle valve is be greater than or equal to a predetermined value K5, the ECU 75 can determine that the straddled vehicle 1 is highly likely to enter a wheelie state in the near future. In other words, in a case where the opening degree of the throttle valve is greater than or equal to the predetermined value K5, the ECU 75 can determine that the closing condition of the on-off valve 58 is satisfied.

Third, a configuration is exemplified in which the closing condition of the on-off valve 58 is determined on the basis of the rotational speed of the engine 31. The crankshaft position sensor 69 detects the rotational speed of the engine 31. As illustrated in FIGS. 6 and 12, information detected by the crankshaft position sensor 69 is transmitted to the ECU 75. As an example, in a case where the rotational speed of the engine 31 is high in circuit traveling or the like, the straddled vehicle 1 rapidly accelerates. When the straddled vehicle 1 rapidly accelerates, the straddled vehicle 1 tends to enter a wheelie state. Therefore, in a case where the crankshaft position sensor 69 detects that the rotational speed of the engine 31 is greater than or equal to a predetermined value K6, the ECU 75 can determine that the straddled vehicle 1 is highly likely to enter a wheelie state in the near future. In other words, in a case where the rotational speed of the engine 31 is greater than or equal to the predetermined value K6, the ECU 75 can determine that the closing condition of the on-off valve 58 is satisfied.

Fourth, a configuration is exemplified in which the closing condition of the on-off valve 58 is determined on the basis of the traveling speed of the straddled vehicle 1. The speed sensor 66 detects the traveling speed of the straddled vehicle 1. As illustrated in FIGS. 6 and 12, information detected by the speed sensor 66 is transmitted to the ECU 75. As an example, when the traveling speed of the straddled vehicle 1 rapidly increases in circuit traveling or the like, the straddled vehicle 1 rapidly accelerates. Therefore, it is possible to determine whether the straddled vehicle 1 is rapidly accelerating by using the speed sensor 66. That is, in a case where the speed sensor 66 detects that the traveling speed of the straddled vehicle 1 is greater than or equal to a predetermined value K7, the ECU 75 can determine that the straddled vehicle 1 is likely to enter a wheelie state in the near future. In other words, in a case where the traveling speed of the straddled vehicle 1 is greater than or equal to the predetermined value K7, the ECU 75 can determine that the closing condition of the on-off valve 58 is satisfied.

Fifth, a configuration is exemplified in which the closing condition of the on-off valve 58 is determined on the basis of the acceleration of the straddled vehicle 1. The acceleration sensor 68 detects the acceleration of the straddled vehicle 1. As illustrated in FIGS. 6 and 12, information detected by the acceleration sensor 68 is transmitted to the ECU 75. As an example, when the acceleration of the straddled vehicle 1 rapidly increases in circuit traveling or the like, the straddled vehicle 1 rapidly accelerates. When the straddled vehicle 1 rapidly accelerates, the straddled vehicle 1 tends to enter a wheelie state. Therefore, in a case where the acceleration sensor 68 detects that the acceleration of the straddled vehicle 1 is greater than or equal to a predetermined value K8, the ECU 75 can determine that the straddled vehicle 1 is likely to enter a wheelie state in the near future. In other words, in a case where the acceleration of the straddled vehicle 1 is greater than or equal to the predetermined value K8, the ECU 75 can determine that the closing condition of the on-off valve 58 is satisfied.

Sixth, a configuration is exemplified in which the closing condition of the on-off valve 58 is determined on the basis of the pressure of the exhaust gas inside the exhaust device 29. The pressure sensor 70 detects the pressure of the exhaust gas inside the exhaust device 29. As illustrated in FIGS. 6 and 12, information detected by the pressure sensor 70 is transmitted to the ECU 75. As an example, when the straddled vehicle 1 rapidly accelerates in circuit traveling or the like, the amount of exhaust gas generated from the engine 31 and guided to the inside of the exhaust device 29 increases. Therefore, by using the pressure sensor 70, it can be determined whether the straddled vehicle 1 is rapidly accelerating. That is, in a case where the pressure sensor 70 detects that the pressure of the exhaust gas inside the exhaust device 29 is greater than or equal to a predetermined value K9, the ECU 75 can determine that the straddled vehicle 1 is highly likely to enter a wheelie state in the near future. In other words, in a case where the pressure of the exhaust gas inside the exhaust device 29 is greater than or equal to the predetermined value K9, the ECU 75 can determine that the closing condition of the on-off valve 58 is satisfied.

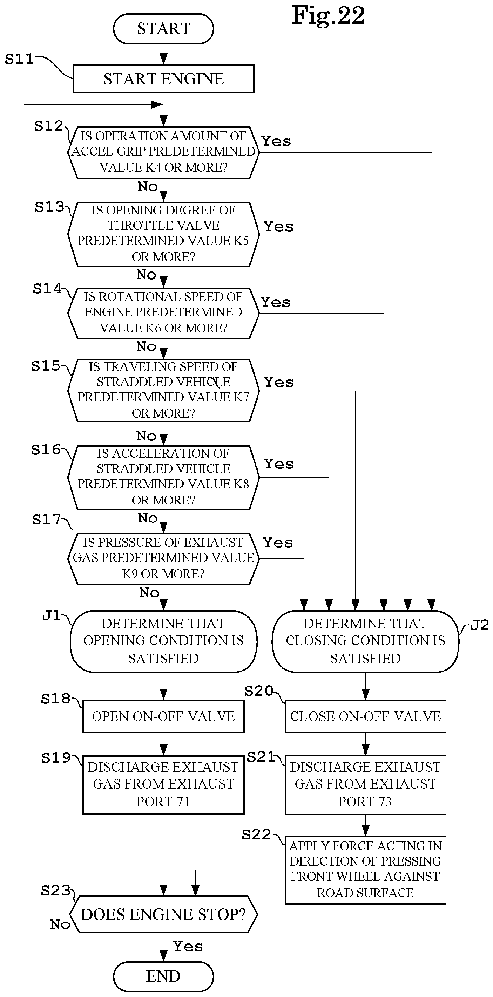

Here, a modification in which the opening/closing operation of the on-off valve 58 is controlled using the accelerator opening degree sensor 61, the throttle valve opening degree sensor 65, the crankshaft position sensor 69, the speed sensor 66, the acceleration sensor 68, the pressure sensor 70, and the ECU 75 will be described. The functional block diagram of the modification is common to the second embodiment illustrated in FIG. 12. FIG. 22 is a flowchart illustrating the operation of the straddled vehicle 1 according to the modification.

The outline of the operation of the straddled vehicle 1 according to the modification is as follows. In a case where the operation of the straddled vehicle 1 starts, the driver causes the engine 31 to start and causes the straddled vehicle 1A to travel (step S11). When the straddled vehicle 1 starts traveling, the ECU 75 constantly monitors which of the closing condition of the on-off valve 58 and the opening condition of the on-off valve 58 is satisfied (steps S12 to S17). In a case where the ECU 75 determines that the opening condition of the on-off valve 58 is satisfied (reference numeral J1), the ECU 75 switches the on-off valve 58 to the opened state and discharges the exhaust gas from the exhaust port 71 (steps S18 and S19). In a case where the ECU 75 determines that the closing condition of the on-off valve 58 is satisfied (reference numeral J2), the ECU 75 switches the on-off valve 58 to the closed state and discharges the exhaust gas from the exhaust port 73 (steps S20 to S22). In a case where the driving of the straddled vehicle 1 ends, the driver causes the engine 31 to stop (step S23).

Details of the process in which the ECU 75 monitors the closing condition and the opening condition of the on-off valve 58 in steps S12 to S17 according to the modification are as follows.

Step S12

First, in step S12, the ECU 75 determines whether the closing condition of the on-off valve 58 is satisfied on the basis of the information transmitted from the accelerator opening degree sensor 61. The accelerator opening degree sensor 61 constantly detects the operation amount of the accelerator grip 21. Then, the accelerator opening degree sensor 61 transmits information of the detected operation amount of the accelerator grip 21 to the ECU 75 as needed.

The ECU 75 reads information of the predetermined value K4 stored in advance in the storage unit 79. The ECU 75 compares the operation amount of the accelerator grip 21 with the predetermined value K4. In a case where the operation amount of the accelerator grip 21 is greater than or equal to the predetermined value K4, the ECU 75 determines that the closing condition of the on-off valve 58 is satisfied (see reference numeral J2).

On the other hand, in a case where the operation amount of the accelerator grip 21 is less than the predetermined value K4, the ECU 75 shifts the process to step S13.

Step S13

When the process proceeds to step S13, the ECU 75 determines whether the closing condition of the on-off valve 58 is satisfied on the basis of the information transmitted from the throttle valve opening degree sensor 65. The throttle valve opening degree sensor 65 constantly detects the opening degree of the throttle valve. Then, the throttle valve opening degree sensor 65 transmits information of the detected the opening degree of the throttle valve to the ECU 75 as needed.

The ECU 75 reads information of the predetermined value K5 stored in advance in the storage unit 79. The ECU 75 compares the opening degree of the throttle valve with the predetermined value K5. In a case where the opening degree of the throttle valve is greater than or equal to the predetermined value K5, the ECU 75 determines that the closing condition of the on-off valve 58 is satisfied (see reference numeral J2). On the other hand, in a case where the opening degree of the throttle valve is less than the predetermined value K5, the ECU 75 shifts the process to step S14.

Step S14

When the process proceeds to step S14, the ECU 75 determines whether the closing condition of the on-off valve 58 is satisfied on the basis of the information transmitted from the crankshaft position sensor 69. The crankshaft position sensor 69 constantly detects the rotational speed of the engine 31. Then, the crankshaft position sensor 69 transmits information on the detected rotational speed of the engine 31 to the ECU 75 as needed.

The ECU 75 reads information of the predetermined value K6 stored in advance in the storage unit 79. The ECU 75 compares the rotational speed of the engine 31 with the predetermined value K6. In a case where the rotational speed of the engine 31 is greater than or equal to the predetermined value K6, the ECU 75 determines that the closing condition of the on-off valve 58 is satisfied (see reference numeral J2). On the other hand, in a case where the rotational speed of the engine 31 is less than the predetermined value K6, the ECU 75 shifts the process to step S15.

Step S15

When the process proceeds to step S15, the ECU 75 determines whether the closing condition of the on-off valve 58 is satisfied on the basis of the information transmitted from the speed sensor 66. The speed sensor 66 constantly detects the traveling speed of the straddled vehicle 1. Then, the speed sensor 66 transmits information on the detected traveling speed to the ECU 75 as needed.

The ECU 75 reads information of the predetermined value K7 stored in advance in the storage unit 79. The ECU 75 compares the traveling speed of the straddled vehicle 1 with the predetermined value K7. In a case where the traveling speed of the straddled vehicle 1 is greater than or equal to the predetermined value K7, the ECU 75 determines that the closing condition of the on-off valve 58 is satisfied (see reference numeral J2). On the other hand, in a case where the traveling speed of the straddled vehicle 1 is less than the predetermined value K7, the ECU 75 shifts the process to step S16.

Step S16

When the process proceeds to step S16, the ECU 75 determines whether the closing condition of the on-off valve 58 is satisfied on the basis of the information transmitted from the acceleration sensor 68. The acceleration sensor 68 constantly detects the acceleration of the straddled vehicle 1. Then, the acceleration sensor 68 transmits information of the detected acceleration to the ECU 75 as needed.

The ECU 75 reads information of the predetermined value K8 stored in advance in the storage unit 79. The ECU 75 compares the acceleration of the straddled vehicle 1 with the predetermined value K8. In a case where the acceleration of the straddled vehicle 1 is greater than or equal to the predetermined value K8, the ECU 75 determines that the closing condition of the on-off valve 58 is satisfied (see reference numeral J2). On the other hand, in a case where the acceleration of the straddled vehicle 1 is less than the predetermined value K8, the ECU 75 shifts the process to step S17.

Step S17

When the process proceeds to step S17, the ECU 75 determines whether the closing condition of the on-off valve 58 is satisfied on the basis of the information transmitted from the pressure sensor 70. The pressure sensor 70 constantly detects the pressure of the exhaust gas inside the exhaust device 29. Then, the pressure sensor 70 transmits information on the detected pressure to the ECU 75 as needed.

The ECU 75 reads information of the predetermined value K9 stored in advance in the storage unit 79. The ECU 75 compares the pressure of the exhaust gas inside the exhaust device 29 with the predetermined value K9. In a case where the pressure of the exhaust gas inside the exhaust device 29 is greater than or equal to the predetermined value K9, the ECU 75 determines that the closing condition of the on-off valve 58 is satisfied (see reference numeral J2).

On the other hand, in a case where the pressure of the exhaust gas inside the exhaust device 29 is less than the predetermined value K9, the ECU 75 determines that none of the closing conditions of the on-off valve 58 is satisfied. In a case where it is determined that none of the closing conditions of the on-off valve 58 is satisfied, the ECU 75 determines that the opening condition of the on-off valve 58 is satisfied (see reference numeral J1). In a case where it is determined that the opening condition of the on-off valve 58 is satisfied, the ECU 75 shifts the process to step S18.

In the modification, in a case where it is determined that the opening condition of the on-off valve 58 is satisfied, the processes of steps S18 and S19 are performed. Steps 18 and 19 according to the modification will be described.

Step S18

In a case where it is determined in step S17 that the opening condition of the on-off valve 58 is satisfied, the process of step S18 is started. In step S18, the ECU 75 performs control to open the on-off valve 58. That is, the on-off valve 58 which is an electric valve is controlled by the ECU 75 and is switched to an opened state.

Step S19

When the on-off valve 58 is switched to the opened state, the exhaust gas guided to the exhaust device 29 via the guide port 59 can flow to the first branch pipe 56. That is, in a case where the on-off valve 58 is opened, the exhaust gas can be discharged from the exhaust port 71 (see FIG. 5). The first branch pipe 56 is larger in diameter than the second branch pipe 57. Therefore, most of the exhaust gas guided from the engine 31 to the exhaust device 29 flows to the first branch pipe 56 and is discharged to the outside from the exhaust port 71. That is, in a case where the opening condition of the on-off valve 58 is satisfied, the exhaust gas is injected from the exhaust port 71 to generate the jet Hc (see FIG. 10). The exhaust port 71 is configured to be larger than the exhaust port 73. Therefore, the exhaust gas can be efficiently discharged from the large exhaust port 71. Thereafter, the process proceeds to step S23.

In the modification, in a case where it is determined that the closing condition of the on-off valve 58 is satisfied, the processes of step S20, step S21, and step S22 are performed. Steps 20 to 22 according to the modification will be described.

Step S20

In a case where it is determined in steps S12 to S17 that the closing condition of the on-off valve 58 is satisfied, the process of step S20 is started. In step S20, the ECU 75 performs control to close the on-off valve 58. That is, the on-off valve 58 which is an electric valve is controlled by the ECU 75 and is switched to a closed state.

Step S21

When the on-off valve 58 is switched to the closed state, the exhaust gas guided to the exhaust device 29 via the guide port 59 cannot flow to the first branch pipe 56 (see FIG. 4). Therefore, all the exhaust gas guided from the engine 31 to the exhaust device 29 is sent to the second branch pipe 57 and discharged to the outside from the exhaust port 73. When the exhaust gas is discharged from the exhaust port 73, the jet H is generated at the start point Ce corresponding to the exhaust port 73 (see FIG. 7).

Step S22

When the jet H is generated at the start point Ce, a reaction force F of the jet H is generated. The reaction force F acts on the front wheel 24. The reaction force F acts in a direction of suppressing the front wheel 24 from floating up from the road surface G. For example, the reaction force F includes the first component force F1. The first component force F1 acts downward in the up-down direction Z on the front wheel 24 (see FIG. 8). For example, the reaction force F generates the first moment M1, and the first moment M1 acts in a direction of pressing the front wheel 24 against the road surface G (see FIG. 9). After the exhaust gas is injected from the discharge port 73, the process proceeds to step S23.

Step S23

After the ECU 75 performs control to switch the on-off valve 58 to the closed state or the opened state, the process is branched depending on the operation status of the engine 31. In a case where the engine 31 is stopped, monitoring of the closing condition and the opening condition by the ECU 75 is stopped. On the other hand, in a case where the operation of the engine 31 is continued, the process branches to step S2. That is, monitoring of the closing condition and the opening condition by the ECU 75 is continued.

In the modification according to (4), the straddled vehicle 1 includes the pressure sensor 70, the speed sensor 66, the acceleration sensor 68, the accelerator opening degree sensor 61, the throttle valve opening degree sensor 65, and the crankshaft position sensor 69. Therefore, it is easy to detect the posture of the straddled vehicle 1. Therefore, it is easy for the ECU 75 to control the on-off valve 58 according to the posture of the straddled vehicle 1.

The modification according to (4) may be further modified as follows.

In the modification according to (4), the sensor of the straddled vehicle 1 may be appropriately changed. For example, the straddled vehicle 1 may include at least one of the pressure sensor 70, the speed sensor 66, the acceleration sensor 68, the accelerator opening degree sensor 61, the throttle valve opening degree sensor 65, and the crankshaft position sensor 69.

The IMU 81 may be used instead of the acceleration sensor 68. For example, in step S16, the IMU 81 may detect the acceleration of the straddled vehicle 1.

In the modification according to (4), six conditions are used as the closing conditions of the on-off valve 58, but the number of closing conditions may be appropriately increased or decreased. As an example, in the flowchart illustrated in FIG. 22, one or more processes among the processes of steps S2 to S7 may be omitted.

In the modification according to (4), the pressure sensor 70 corresponds to a third sensor of the present invention. The speed sensor 66 corresponds to a fourth sensor of the present invention. The acceleration sensor 68 corresponds to a fifth sensor of the present invention. The IMU 81 may correspond to the fifth sensor of the present invention. The accelerator opening degree sensor 61 corresponds to a sixth sensor of the present invention. The throttle valve opening degree sensor 65 corresponds to a seventh sensor of the present invention. The crankshaft position sensor 69 corresponds to an eighth sensor of the present invention.

(5) In the second embodiment, the straddled vehicle 1A has included the stroke sensor 64 and the IMU 81. However, the sensor of the straddled vehicle 1A may be appropriately changed. For example, the straddled vehicle 1A may include at least one of the stroke sensor 64 and the IMU 81. For example, the straddled vehicle 1A may include a gyro sensor. The gyro sensor detects a pitch angle of the straddled vehicle 1A.

(6) In each embodiment, the second branch pipe 57 is disposed so as to extend rearward and upward in a vehicle side view. However, the present invention is not limited thereto. The direction in which the second branch pipe 57 extends may be appropriately changed according to the position and direction of the exhaust port 73. As an example, the second branch pipe 57 may be disposed so as to extend in the horizontal direction or may be disposed so as to extend in the vertical direction.

(7) In each embodiment, the on-off valve 58 has switched the flow path of the exhaust gas in the exhaust device 29. However, the configuration for switching the flow path of the exhaust gas in the exhaust device 29 is not limited thereto. Hereinafter, two modifications will be described.

(7-1) First Modification

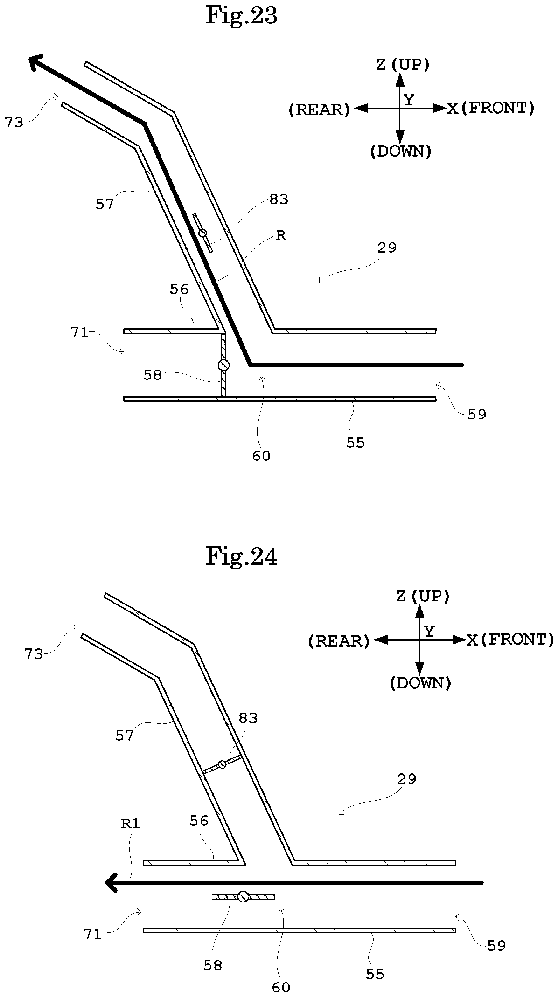

As illustrated in FIG. 23, the exhaust device 29 includes an on-off valve 83 in addition to the on-off valve 58. The on-off valve 83 is disposed in the second branch pipe 57. The on-off valve 83 opens and closes the exhaust port 73.

In the first modification, in a case where the specific condition that the front wheel 24 is highly likely to float up from the road surface G is satisfied, the on-off valve 58 is switched to the closed state and the on-off valve 83 is switched to the opened state as illustrated in FIG. 23. That is, the on-off valve 58 closes the exhaust port 71, while the on-off valve 83 is switched to a state of not closing the exhaust port 73. The specific condition under which it is determined that the front wheel 24 is highly likely to float up from the road surface G corresponds to the closing condition described in the first embodiment and the like. As illustrated in FIG. 23, by switching the opened/closed states of the on-off valve 58 and the on-off valve 83, the exhaust gas guided to the exhaust device 29 reliably flows to the second branch pipe 57 and is discharged from the exhaust port 73.

On the other hand, in a case where the specific condition that the front wheel 24 is highly likely to float up from the road surface G is not satisfied, the on-off valve 58 is switched to the opened state and the on-off valve 83 is switched to the closed state as illustrated in FIG. 24. That is, the on-off valve 83 closes the exhaust port 73, while the on-off valve 58 is switched to a state of not closing the exhaust port 71. As illustrated in FIG. 24, by switching the opened/closed states of the on-off valve 58 and the on-off valve 83, the exhaust gas guided to the exhaust device 29 reliably flows to the first branch pipe 56 and is discharged from the exhaust port 71.

As described above, in the first modification, the exhaust device 29 includes the on-off valve 58 and the on-off valve 83. Therefore, the exhaust gas guided to the exhaust device 29 can be reliably discharged from only one of the exhaust port 71 and the exhaust port 73.

(7-2) Second Modification

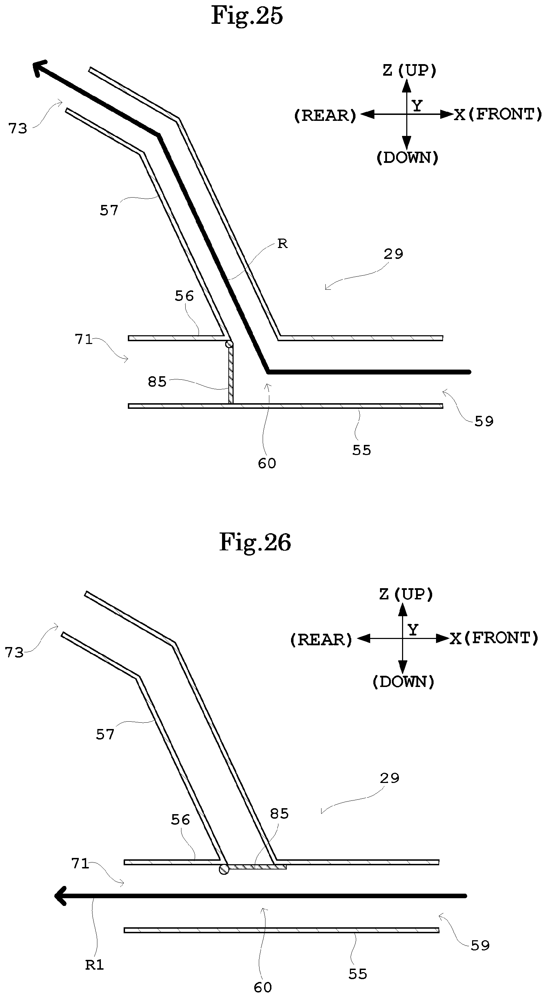

As illustrated in FIG. 25, the exhaust device 29 includes an on-off valve 85 instead of the on-off valve 58. The on-off valve 85 alternatively closes the first branch pipe 56 and the second branch pipe 57. The on-off valve 85 opens and closes the exhaust port 71 and opens and closes the exhaust port 73. When the on-off valve 85 opens the exhaust port 71, the on-off valve 85 closes the exhaust port 73. When the on-off valve 85 opens the exhaust port 73, the on-off valve 85 closes the exhaust port 71. The on-off valve 85 is also called a three-way valve.

In the second modification, in a case where a specific condition that the front wheel 24 is highly likely to float up from the road surface G is satisfied, the on-off valve 85 closes the first branch pipe 56 as illustrated in FIG. 25. When the on-off valve 85 closes the first branch pipe 56, the exhaust gas is reliably discharged from the exhaust port 73.

On the other hand, in a case where the specific condition that the front wheel 24 is highly likely to float up from the road surface G is not satisfied, the on-off valve 85 closes the second branch pipe 57 as illustrated in FIG. 26. When the on-off valve 85 closes the second branch pipe 57, the exhaust gas is reliably discharged from the exhaust port 71.

As described above, in the second modification, the exhaust device 29 includes the on-off valve 85.

Therefore, the exhaust gas guided to the exhaust device 29 can be reliably discharged from only one of the exhaust port 71 and the exhaust port 73.

In the second modification of (7-2), the on-off valve 85 corresponds to a main valve in the present invention.

(8) In each embodiment, the number of front wheels 24 is one. However, the present invention is not limited thereto. The number of front wheels 24 may be 2 or more. In each embodiment, the number of rear wheels 49 is one. However, the present invention is not limited thereto. The number of rear wheels 49 may be 2 or more.

(9) In each of the first to fourth embodiments and the modifications described in (1) to (8), each configuration may be appropriately changed by further replacing or combining each configuration with a configuration of another modification example. Reference Signs List

1: Straddled vehicle
3: Vehicle body frame
5: Head pipe
7: Main frame
9: Steering device
11: Top bridge
13: Bottom bridge
14: Front fork
15: Handle
17: Clutch lever
19: Brake lever
21: Accelerator grip
23: Front axle
24: Front wheel
25: Front wheel brake device
29: Exhaust device
31: Engine
33: Crank shaft
35: Transmission
37: Shift pedal
39: Fuel tank
41: Sheet
43: Pivot axis
45: Swing arm
47: Rear axle (rotation center of rear wheel)
49: Rear wheel
51: Rear wheel brake device
53: Brake pedal
55: Junction pipe
56: First branch pipe
57: Second branch pipe
58: On-off valve (main valve)
59: Guide port
60: Branch portion
61: Accelerator opening degree sensor (sixth sensor)
63: Fuel supply device
64: Stroke sensor (second sensor)
65: Throttle valve opening degree sensor (seventh sensor)

66: Speed sensor (fourth sensor)
67: Gear position sensor
68: Acceleration sensor (fifth sensor)
69: Crankshaft position sensor (eighth sensor)
70: Pressure sensor (third sensor)
71: Exhaust port (main exhaust port)
73: Exhaust port (first exhaust port)
75: ECU (main valve control unit)
77: CPU
79: Storage unit
81: IMU (first sensor)
H: Jet
F: Reaction force (first force)
F1: First component force (first component)
F2: Second component force
F3: Third component force
M1: First moment

**Claims**

1. A straddled vehicle (1) comprising:

   a front wheel (24);
   a rear wheel (49); and
   an exhaust device (29) that discharges exhaust gas,
   wherein the exhaust device (29) includes a first exhaust port (73) that injects the exhaust gas to apply a first force (F) to the front wheel (24), and the first force (F) acts in a direction of suppressing the front wheel (24) from floating up from a road surface (G).

2. The straddled vehicle (1) according to claim 1, wherein
   the first force (F) is a reaction force of a jet (H) of the exhaust gas injected from the first exhaust port (73).

3. The straddled vehicle (1) according to claim 1, wherein
   the first exhaust port (73) is configured to eject the exhaust gas backward.

4. The straddled vehicle (1) according to claim 1, wherein
   the first exhaust port (73) is disposed above a rotation center of the rear wheel (49).

5. The straddled vehicle (1) according to claim 1, wherein

   the first force (F) generates a first moment (M1) around a rear contact point (T) between the rear wheel (49) and the road surface (G), and
   the first moment (M1) acts in a direction of pressing the front wheel (49) against the road surface (G).

6. The straddled vehicle (1) according to claim 1, wherein
   the first exhaust port (73) is configured to eject the exhaust gas upward.

7. The straddled vehicle (1) according to claim 1, wherein
   the first force (F) includes a first component (F1) acting on the front wheel in a downward direction.

8. The straddled vehicle (1) according to claim 1, wherein

   the exhaust device (29) includes a main exhaust port (71) through which the exhaust gas is discharged, and
   the first exhaust port (73) is smaller than the main exhaust port (71).

9. The straddled vehicle (1) according to claim 8, wherein
   the first exhaust port (73) is disposed above the main exhaust port (71).

10. The straddled vehicle (1) according to claim 8, wherein
    the exhaust device (29) includes a main valve (58) that opens and closes the main exhaust port (71).

11. The straddled vehicle (1) according to claim 10, wherein
    the main valve (58) is configured to open the main exhaust port (71) in a case where a pressure of the exhaust gas in the exhaust device (29) is be greater than or equal to a predetermined value (K1).

12. The straddled vehicle (1) according to claim 10, comprising:

    a detection unit (61, 64, 65, 66, 68, 69, 70, 81) that detects a state of the straddled vehicle (1); and
    a main valve control unit (75) that controls the main valve (58) on a basis of a detection result of the detection unit (61, 64, 65, 66, 68, 69, 70, 81).

13. The straddled vehicle (1) according to claim 12, wherein

    the main valve control unit (75) is configured to determine whether the front wheel (24) is likely to float up from the road surface (G) on a basis of a detection result of the detection unit (61, 64, 65, 66, 68, 69, 70, 81), and
    the main valve control unit (75) is configured to close the main valve (58) in a case where the main valve control unit (75) determines that the front wheel (24) is about to float up from the road surface (G).

14. The straddled vehicle (1) according to claim 12, wherein
the detection unit (61, 64, 65, 66, 68, 69, 70, 81) includes at least one of a first sensor (81) that detects a pitch angle of the straddled vehicle (1) and a second sensor (64) that detects a stroke amount of a front fork (14) that supports the front wheel (24).

15. The straddled vehicle (1) according to claim 12, wherein
the detection unit (61, 64, 65, 66, 68, 69, 70, 81) includes at least one of:

   a third sensor (70) that detects a pressure of the exhaust gas in the exhaust device (29);
   a fourth sensor (66) that detects a speed of the straddled vehicle (1);
   a fifth sensor (68) that detects acceleration of the straddled vehicle (1);
   a sixth sensor (61) that detects an operation amount of an accelerator of the straddled vehicle (1);
   a seventh sensor (65) that detects an opening degree of a throttle valve of the straddled vehicle (1); and
   an eighth sensor (68) that detects a rotational speed of an engine of the straddled vehicle (1).

Fig.1

Fig.2

Z(UP)

(REAR) ← Y → X(FRONT)

(DOWN)

EP 4 620 794 A1

## Fig.3

## Fig.4

# Fig.5

Z (UP)

(REAR) ◄──┼──► X (FRONT)
           Y
        (DOWN)

# Fig.6

| ECU |
| --- |

75

81

IMU

61

79 — STORAGE UNIT

ACCELERATOR OPENING DEGREE SENSOR

SPEED SENSOR  66

CPU  77

THROTTLE VALVE OPENING DEGREE SENSOR

ACCELERATION SENSOR

65

68

CRANKSHAFT POSITION SENSOR  69

PRESSURE SENSOR  70

STROKE SENSOR  64

1

## Fig.7

## Fig.8

## Fig.9

## Fig.10

# Fig.11

Z (UP)

(REAR) ← Y → X(FRONT)

(DOWN)

1

Ce

Fc

Hc    Cf

49    Dk

Mc    G

T

# Fig.12

1A

ON-OFF
VALVE    58

75

61    ECU

79    STORAGE
UNIT

ACCELERATOR
OPENING
DEGREE
SENSOR

THROTTLE
VALVE
OPENING
DEGREE
SENSOR

CPU    77

65

CRANKSHAFT
POSITION
SENSOR

PRESSURE
SENSOR

STROKE
SENSOR

IMU    81

SPEED
SENSOR    66

ACCELERATION
SENSOR

68

69    70    64

# Fig.13

START

S1 — START ENGINE

S2 — IS PITCH ANGLE PREDETERMINED VALUE K2 OR MORE? — Yes

No

S3 — IS STROKE AMOUNT OF FRONT FORK PREDETERMINED VALUE K3 OR MORE? — Yes

No

J1 — DETERMINE THAT OPENING CONDITION IS SATISFIED

J2 — DETERMINE THAT CLOSING CONDITION IS SATISFIED

S4 — OPEN ON-OFF VALVE

S6 — CLOSE ON-OFF VALVE

S5 — DISCHARGE EXHAUST GAS FROM EXHAUST PORT 71

S7 — DISCHARGE EXHAUST GAS FROM EXHAUST PORT 73

S8 — APPLY FORCE ACTING IN DIRECTION OF PRESSING FRONT WHEEL AGAINST ROAD SURFACE

S9 — DOES ENGINE STOP?

No

Yes

END

## Fig.14

## Fig.15

## Fig.16

## Fig.17

## Fig.18

Z(UP)

(REAR) ← Y → X(FRONT)

(DOWN)

1C

73C

H

Ce

57

71

47

49

56

55

24

G

T

29C

## Fig.19

Z(UP)

(REAR) ← Y → X(FRONT)

(DOWN)

1C

Lw

M1

H

Ce

N

F(F3)

47

49

24

G

T

## Fig.20

## Fig.21

## Fig.22

```
        ( START )
           │
S11 ──  START ENGINE
           │
           ▼◄───────────────────────────┐
S12  IS OPERATION AMOUNT OF        Yes   │
     ACCEL GRIP PREDETERMINED  ──────────┼──┐
     VALUE K4 OR MORE?                   │  │
           │ No                          │  │
S13  IS OPENING DEGREE OF          Yes   │  │
     THROTTLE VALVE           ───────────┼──┤
     PREDETERMINED VALUE K5            │  │
     OR MORE?                            │  │
           │ No                          │  │
S14  IS ROTATIONAL SPEED OF       Yes   │  │
     ENGINE PREDETERMINED  ─────────────┼──┤
     VALUE K6 OR MORE?                   │  │
           │ No                          │  │
S15  IS TRAVELING SPEED OF        Yes   │  │
     STRADDLED VEHICLE       ────────────┼──┤
     PREDETERMINED VALUE K7              │  │
     OR MORE?                            │  │
           │ No                          │  │
S16  IS ACCELERATION OF           Yes   │  │
     STRADDLED VEHICLE       ────────────┼──┤
     PREDETERMINED VALUE K8              │  │
     OR MORE?                            │  │
           │ No                          │  │
S17  IS PRESSURE OF EXHAUST       Yes   │  │
     GAS PREDETERMINED VALUE ────────────┼──┤
     K9 OR MORE?                         │  │
           │ No                          │  │
           ▼                             ▼  ▼
J1  DETERMINE THAT           DETERMINE THAT      J2
    OPENING CONDITION IS     CLOSING CONDITION IS
    SATISFIED                SATISFIED
           │                        │
S18  OPEN ON-OFF VALVE    S20  CLOSE ON-OFF VALVE
           │                        │
S19  DISCHARGE EXHAUST    S21  DISCHARGE EXHAUST
     GAS FROM EXHAUST           GAS FROM EXHAUST
     PORT 71                    PORT 73
           │                        │
           │               S22  APPLY FORCE ACTING IN
           │                    DIRECTION OF PRESSING
           │                    FRONT WHEEL AGAINST
           │                    ROAD SURFACE
           │                        │
           ▼                        ▼
S23  ┌─ DOES ENGINE STOP? ◄─────────┘
     No                │
                       │ Yes
                    ( END )
```

## Fig.23

## Fig.24

## Fig.25

## Fig.26

Europäisches
Patentamt

European
Patent Office

Office européen
des brevets

# EUROPEAN SEARCH REPORT

**Application Number**

EP 25 16 2036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 159 393 A1 (YAMAHA MOTOR RES & DEV EUROPE SRL [IT]) 3 March 2010 (2010-03-03) | 1-7 | INV.<br>B62K11/04<br>B62M7/02 |
| A | * figures 1,4 * | 8-15 | |
| X | WO 98/19056 A1 (HONDA MOTOR CO LTD [JP]; OGISU NORIYUKI [JP] ET AL.) 7 May 1998 (1998-05-07) * figures 1-3,8,10,11 * | 1-8 | |
| X | Cameron Kevin: "MotoGP Racing Technology Examined, Kevin Cameron Insights ¦ Cycle World", , 14 February 2017 (2017-02-14), XP093294357, Retrieved from the Internet: URL:https://www.cycleworld.com/motogp-racing-winglets-anti-wheelie-technology-examined/ [retrieved on 2025-07-09] * page 3, paragraph 2 - page 4, paragraph 1 * | 1-7 | |
| X | EP 3 118 439 A1 (DUCATI MOTOR HOLDING SPA [IT]) 18 January 2017 (2017-01-18) * paragraph [0043] - paragraph [0045]; figures 1,2 * | 1-7 | TECHNICAL FIELDS SEARCHED (IPC)<br><br>B62K<br>B62M<br>F01N |
| X | US 7 364 010 B2 (HONDA MOTOR CO LTD [JP]) 29 April 2008 (2008-04-29) * column 6, line 60 - line 64; figures 1-3,6a,6b * * column 8, line 61 - column 9, line 17 * | 1-8, 10-12 | |

The present search report has been drawn up for all claims

| Place of search | Date of completion of the search | Examiner |
|---|---|---|
| The Hague | 10 July 2025 | Booij, Nico |

EPO FORM 1503 03.82 (P04C01)

## ANNEX TO THE EUROPEAN SEARCH REPORT
## ON EUROPEAN PATENT APPLICATION NO.

EP 25 16 2036

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2025

| Patent document cited in search report | | Publication date | Patent family member(s) | | Publication date |
|---|---|---|---|---|---|
| EP 2159393 | A1 | 03-03-2010 | AT | E499513 T1 | 15-03-2011 |
| | | | BR | PI0902662 A2 | 25-05-2010 |
| | | | CN | 101659310 A | 03-03-2010 |
| | | | EP | 2159393 A1 | 03-03-2010 |
| | | | ES | 2359470 T3 | 23-05-2011 |
| | | | TW | 201026945 A | 16-07-2010 |
| WO 9819056 | A1 | 07-05-1998 | AR | 009389 A1 | 12-04-2000 |
| | | | BR | 9712693 A | 19-10-1999 |
| | | | CA | 2265737 A1 | 07-05-1998 |
| | | | CN | 1235655 A | 17-11-1999 |
| | | | CO | 4750695 A1 | 31-03-1999 |
| | | | DE | 949407 T1 | 17-02-2000 |
| | | | DE | 69705745 T2 | 31-10-2001 |
| | | | EP | 0949407 A1 | 13-10-1999 |
| | | | ES | 2138572 T1 | 16-01-2000 |
| | | | ID | 21360 A | 27-05-1999 |
| | | | IL | 128805 A | 20-05-2001 |
| | | | JP | H10131746 A | 19-05-1998 |
| | | | KR | 20000048701 A | 25-07-2000 |
| | | | MY | 119717 A | 29-07-2005 |
| | | | PE | 6999 A1 | 17-02-1999 |
| | | | TR | 199900938 T2 | 21-07-2000 |
| | | | US | 6026930 A | 22-02-2000 |
| | | | WO | 9819056 A1 | 07-05-1998 |
| | | | ZA | 979571 B | 12-05-1998 |
| EP 3118439 | A1 | 18-01-2017 | AU | 2016204899 A1 | 02-02-2017 |
| | | | EP | 3118439 A1 | 18-01-2017 |
| | | | ES | 2697406 T3 | 23-01-2019 |
| | | | JP | 6645925 B2 | 14-02-2020 |
| | | | JP | 2017096248 A | 01-06-2017 |
| | | | US | 2017015295 A1 | 19-01-2017 |
| US 7364010 | B2 | 29-04-2008 | BR | PI0501359 A | 10-01-2006 |
| | | | CA | 2505272 A1 | 27-10-2005 |
| | | | CN | 1690378 A | 02-11-2005 |
| | | | JP | 4424593 B2 | 03-03-2010 |
| | | | JP | 2005313671 A | 10-11-2005 |
| | | | KR | 20060047405 A | 18-05-2006 |
| | | | MX | PA05004104 A | 31-10-2005 |
| | | | TW | I304110 B | 11-12-2008 |
| | | | US | 2005236205 A1 | 27-10-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002070709 A